(19) **Europäisches Patentamt / European Patent Office / Office européen des brevets**

(11) **EP 1 282 968 B1**

(12) **FASCICULE DE BREVET EUROPEEN**

(45) Date de publication et mention de la délivrance du brevet:
**07.12.2016 Bulletin 2016/49**

(51) Int Cl.:
**H04L 25/03** *(2006.01)*   **H04L 1/00** *(2006.01)*

(21) Numéro de dépôt: **01936521.2**

(22) Date de dépôt: **15.05.2001**

(86) Numéro de dépôt international:
**PCT/FR2001/001471**

(87) Numéro de publication internationale:
**WO 2001/089164 (22.11.2001 Gazette 2001/47)**

(54) **PROCEDE ET SYSTEME DE DETECTION ET DE DECODAGE ITERATIF DE SYMBOLES RECUS, COUPLE A UNE REESTIMATION DES COEFFICIENTS DU CANAL DE TRANSMISSION**

VERFAHREN UND VORRICHTUNG ZUR ERKENNUNG UND ITERATIVEN DEKODIERUNG VON EMPFANGSSYMBOLEN, ZUSAMMEN MIT ÜBERTRAGUNGSKANALKOEFFIZIENTENSCHÄTZUNG

METHOD AND SYSTEM FOR DETECTING AND ITERATIVE DECODING OF RECEIVED SYMBOLS, COUPLED WITH REEVALUATION OF TRANSMISSION CHANNEL COEFFICIENTS

(84) Etats contractants désignés:
**AT BE CH CY DE DK ES FI FR GB GR IE IT LI LU MC NL PT SE TR**

(30) Priorité: **16.05.2000 FR 0006246**

(43) Date de publication de la demande:
**12.02.2003 Bulletin 2003/07**

(73) Titulaire: **Orange**
**75015 Paris (FR)**

(72) Inventeurs:
- **BERTHET, Antoine**
  **F-92290 Chatenay Malabry (FR)**
- **VISOZ, Raphaël**
  **F-92130 Issy-les-Moulineaux (FR)**

(74) Mandataire: **Cabinet Plasseraud**
**66, rue de la Chaussée d'Antin**
**75440 Paris Cedex 09 (FR)**

(56) Documents cités:
- **PANBONG HA ET AL: "Improved blind turbo detector" VTC2000-SPRING. 2000 IEEE 51ST VEHICULAR TECHNOLOGY CONFERENCE PROCEEDINGS( CAT NO. 00CH37026), vol. 2, 15 - 18 mai 2000, pages 1196-1199, XP002164638 Piscataway, NJ, USA, IEEE, USA ISBN: 0-7803-5718-3**
- **PICART A ET AL: "TURBO-DETECTION: A NEW APPROACH TO COMBAT CHANNEL FREQUENCY SELECTIVITY" IEEE INTERNATIONAL CONFERENCE ON COMMUNICATIONS (ICC),US,NEW YORK, IEEE, 8 juin 1997 (1997-06-08), pages 1498-1502, XP000748893 ISBN: 0-7803-3926-6**
- **BAUCH G ET AL: "ITERATIVE EQUALIZATION AND DECODING FOR THE GSM - SYSTEM" OTTAWA, CANADA, MAY 18 - 21, 1998,NEW YORK, NY: IEEE,US, vol. CONF. 48, 18 mai 1998 (1998-05-18), pages 2262-2266, XP000903423 ISBN: 0-7803-4321-2**
- **BENEDETTO S ET AL: "SOFT-INPUT SOFT-OUTPUT MODULES FOR THE CONSTRUCTION AND DISTRIBUTED ITERATIVE DECODING OF CODE NETWORKS" EUROPEAN TRANSACTIONS ON TELECOMMUNICATIONS,EUREL PUBLICATION, MILANO,IT, vol. 9, no. 2, 1 mars 1998 (1998-03-01), pages 155-172, XP000751912 ISSN: 1124-318X**
- **LEI WEI: "On bootstrap iterative Viterbi algorithm" 1999 IEEE INTERNATIONAL CONFERENCE ON COMMUNICATIONS (CAT. NO. 99CH36311), VANCOUVER, BC, CANADA, vol. 2, 6 - 10 juin 1999, pages 1187-1191, XP002164639 Piscataway; NJ, USA, IEEE, USA ISBN: 0-7803-5284-X**

- DOUILLARD C ET AL: "ITERATIVE CORRECTION OF INTERSYMBOL INTERFERENCE: TURBO-EQUALIZATION" EUROPEAN TRANSACTIONS ON TELECOMMUNICATIONS AND RELATED TECHNOLOGIES,IT,AEI, MILANO, vol. 6, no. 5, 1 septembre 1995 (1995-09-01), pages 507-511, XP002055352 ISSN: 1120-3862 cité dans la demande
- GERSTACKER AND SCHOBER: "Equalisation for EDGE mobile communications" ELECTRONICS LETTERS, vol. 36, no. 2, 20 janvier 2000 (2000-01-20), pages 189-191, XP000997572

- FRANZ B. & BAUCH G.: "Iterative channel estimation for turbo detection" CODIERUNG FÜR QUELLE, KANAL UND UBERTRAGUNG, no. 146, mars 1998 (1998-03), pages 149-154, XP000997637

**Description**

L'invention concerne un procédé et un système de détection et de décodage itératif de symboles reçus, couplé à une réestimation des coefficients du canal de transmission.

Dans le domaine de la radiotéléphonie mobile, le processus de détection et de décodage des symboles transmis, par codage et modulation de canal d'une onde porteuse, doit impérativement prendre en compte les interactions du canal de transmission, afin de minimiser les effets de ce dernier et obtenir une qualité de réception satisfaisante.

Alors que le canal de transmission présente, au cours de la transmission des symboles, des caractéristiques radioélectriques et, en conséquence, une fonction de transfert variable dans le temps, les récepteurs utilisés à l'heure actuelle mettent en oeuvre soit des processus de détection et de décodage optimaux, une égalisation quasi parfaite des effets de ce canal de transmission étant obtenue, soit des processus de détection et de décodage sous-optimaux, pour lesquels une itération du processus de détection et de décodage permet de se rapprocher d'une égalisation quasi parfaite des effets du canal de transmission.

La mise en oeuvre de processus de détection et de décodage optimaux s'avère à l'heure actuelle quasi impossible car elle nécessite une complexité de calcul très importante, en particulier dans le cas de canaux de transmission présentant une réponse impulsionnelle trop longue, tel qu'en milieu urbain par exemple.

La mise en oeuvre de processus de détection et de décodage sous-optimaux susceptible d'être utilisée dans les récepteurs de type GSM évolué (EDGE) actuels par exemple, fait appel à un processus d'égalisation sous-optimal désigné par DDFSE (pour *Delayed Décision Feedback Séquence Estimator*), ce processus impliquant la mise en oeuvre d'un préfiltrage ayant pour objet de rendre le canal de transmission estimé à phase minimale. On rappelle qu'un canal de transmission à phase minimale peut être assimilé à un filtre permettant la transmission de composantes temporelles dont l'énergie est concentrée dans les premiers coefficients de ce filtre, correspondant aux retards les plus faibles. Pour une description plus détaillée du processus d'égalisation DDFSE, on pourra utilement se reporter aux articles intitulés :

- "Delayed Decision-Feedback Séquence Estimation", publié par A. DUEL-HALLEN, C. HEEGARD - IEEE Trans. on Commun., vol.37, pp. 428-436, Mai 1989 ;
- "Filtre correcteur de phase pour égaliseurs sous-optimaux", publié par A. WAUTIER, J.C. DANY, C. MOUROT,

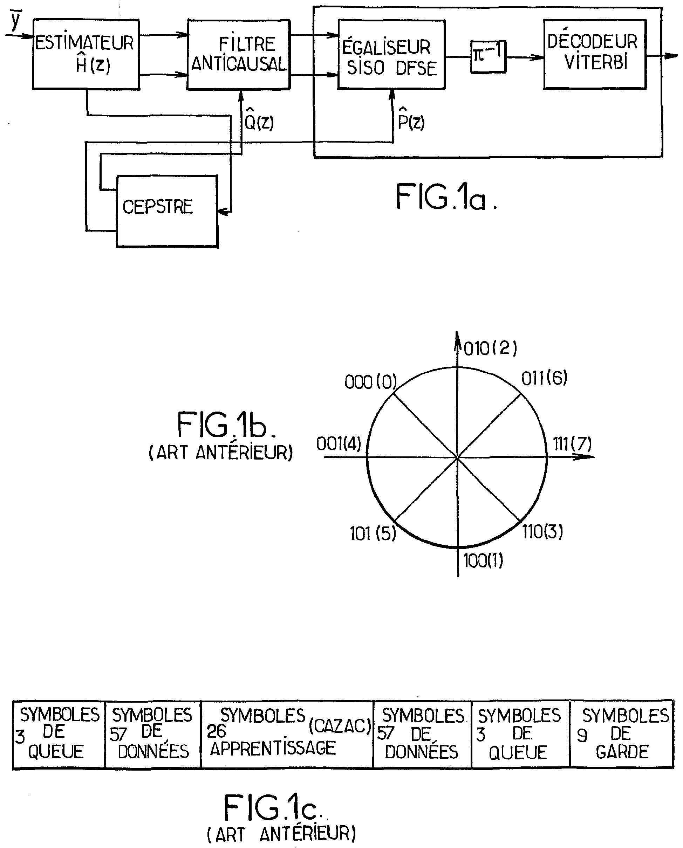

Annales de Télécommunications, n° 9-10, 1992.
En outre, en référence aux articles précités, la figure 1a représente, à titre indicatif, un récepteur susceptible de mettre en oeuvre un processus d'égalisation DDFSE à sorties pondérées et un décodeur convolutif de type Viterbi. Un module de désentrelacement des sorties pondérées, noté $\Pi^{-1}$, permet de tenir compte du processus d'entrelacement des symboles préalablement au codage et à la transmission de ces derniers.

Le principe de la détection et du décodage par itération, encore appelé "*turbo-détection*" a été initialement proposé par C. DOUILLARD, M. JEZEQUEL, C. BERROU, A. PICART, P. DIDIER, A. GLAVIEUX dans un article intitulé "Iterative Correction of Intersequential Interference: Turbo-Equalization" et publié par European Transactions on Télécommunications, vol.6, pp. 507 à 511, Septembre 1995.

Dans ce processus de détection et de décodage, le processus d'égalisation utilisé est un égaliseur à maximum de vraisemblance, à entrées et sorties pondérées, désigné par SISO MLSE, tandis que le processus de décodage convolutif mis en oeuvre est basé sur un processus de Viterbi à entrées et sorties pondérées, désigné par SOVA. Le processus de décodage SOVA a fait l'objet d'une publication intitulée "A Low Complexity Soft Output Viterbi Decoder Architecture", ICC'93, pp. 733 à 740, Genève, Suisse, Mai 1993.

Le processus de détection et de décodage précité a, depuis, fait l'objet de développements extensifs, lesquels ont conduit à la mise en oeuvre de détecteurs optimaux à Maximum de Probabilité a posteriori (MAP). Pour une description plus détaillée de ces types de détecteurs optimaux, on pourra utilement se reporter aux articles intitulés :

- "Optimal Decoding of Linear Codes for Minimizing Symbol Error Rate", publié par L.R. BAHL, J. COCKE, F. JELINEK, J. RAVIV, édité par IEEE Transactions on Information Theory, vol. IT-20, pp. 284-287, Mars 1994 ;
- "Iterative Equalization and Decoding in Mobile Communications Systems", publié par G. BAUCH, H. KHORRAM, J. HAGENAUER dans Proc. EPMCC'97, pp.307-312, Bonn, Allemagne, Septembre 1997.

Alors que le processus de turbo-détection précité annule effectivement l'Interférence Entre Symboles (IES), introduite par l'effet de transmission du canal sous les hypothèses d'une estimation parfaite des coefficients du canal et d'une profondeur d'entrelacement suffisante des symboles, une dégradation irréversible du taux d'erreur binaire de 2,5 à 3 dB apparaît toutefois dans le cas d'une estimation initiale bruitée des coefficients du canal de transmission. Confer l'article intitulé "A Comparison of Soft-In-Soft-Out Algorithms for Turbo-Detection", publié par G. BAUCH, V. FRANZ, International Conference on Télécommunications (ICT), vol.2, pp. 259 à 263, Portos Caras, Grèce, Juin 1998.

Enfin, un nouveau procédé de mise en oeuvre itérative des opérations de détection de symboles et de décodage de canal, appelé processus de turbo-égalisation, substantiellement différent du processus de turbo-détection précité, a été proposé dès 1997. Confer l'article intitulé "Turbo-Equalization over Frequency Selective Channel" - International Symposium on Turbo-Codes, Brest, France, Septembre 1997.

De manière générale, on indique que le processus de turbo-égalisation précité suppose, par essence, une estimation bruitée du canal de transmission. Bien que ce processus de turbo-égalisation apparaisse prometteur dans le cas de modulations à grande efficacité spectrale, il semble toutefois introduire des dégradations en performances, dépendant fortement du type de processus d'égalisation employé pour la première itération, vis-à-vis du processus de turbo-détection avec estimation bruitée. Confer en particulier l'article intitulé « Joint Equalization and Decoding: Why Choose the Iterative Solution? », publié par A. ROUMY, I. FIGALKOW, D. PIREZ, IEEE VTC'1999 Fall, Amsterdam, Netherlands, Septembre 1999.

En outre, le document Panbong Ha et al. « Improved blind turbo detector » VTC 2000 -SPRING. 2000 IEEE 51st Vehicular Technology Conference Proceedings Vol. 2 15-18 mai 2000 p. 1196-1199 révèle le principe de la turbodétection.

Il ne révèle toutefois aucunement la mise en oeuvre d'une ré-estimation des coefficients de la réponse impulsionnelle du canal de transmission.

Le document Bauch G et al. « Iterative Equalization and Decoding for the GSM - System » Ottawa, Canada May 18-21 1998, IEEE, US vol. conf. 48 - 18 mai 1998, pages 2262-2266, révèle le principe de turbodétection et d'estimation adaptative du canal de transmission.

Toutefois, la ré-estimation du canal de transmission est effectuée à partir de l'information extrinsèque issue du processus d'échange d'information et est mise en oeuvre à partir d'un égaliseur MAP, lequel ne peut être utilisé pour les modulations d'ordre élevé.

La présente invention a pour objet de remédier aux inconvénients et aux limitations des processus de turbo-détection de l'art antérieur par la mise en oeuvre d'un procédé et d'un système de détection et de décodage dans lesquels le processus d'égalisation et de décodage est soumis à un processus itératif consistant en un échange d'information a priori, d'une part, sur les bits des symboles pour l'égaliseur en provenance du décodeur, et, d'autre part, sur les bits codés pour le décodeur en provenance de l'égaliseur et où, en outre, une réestimation itérative des coefficients de la réponse impulsionnelle du canal est effectuée, en fonction des informations délivrées par ce processus itératif d'égalisation et de décodage.

Un autre objet de la présente invention est en conséquence la mise en oeuvre d'un procédé et d'un système de détection et de décodage itératif susceptible de mettre en oeuvre des processus d'égalisation sous-optimaux distincts, tels que le processus DDFSE ou GSOVA *(Generalized Soft Output Viterbi Algorithm)*.

Un autre objet de la présente invention est également la mise en oeuvre d'un procédé et d'un système de détection et de décodage itératif susceptible de mettre en oeuvre des processus de réestimation des coefficients de la réponse impulsionnelle du canal par un processus itératif optimal ou par un processus sous-optimal de type *bootstrap,* (bouclage de réestimation linéaire).

Le procédé et le système de détection et de décodage itératif de symboles codés et entrelacés transmis sur un canal de transmission, objets de la présente invention, ces symboles étant transmis à partir d'une séquence de symboles binaires, chaque séquence de symboles reçus comportant au moins, outre les symboles de données, de garde et de queue, des symboles d'apprentissage spécifiques, sont remarquables en ce que ce procédé consiste à et ce dispositif permet de, préalablement à tout itération, effectuer une estimation linéaire initiale des coefficients de la réponse impulsionnelle du canal de transmission à partir des symboles d'apprentissage spécifiques transmis, puis par itération, soumettre le processus d'égalisation et de décodage à un processus itératif d'échange d'information a priori, d'une part, sur les bits de symboles pour le processus d'égalisation en provenance du processus de décodage et, d'autre part, sur les bits codés pour le processus de décodage, en provenance du processus d'égalisation, effectuer une réestimation itérative actualisée des coefficients de la réponse impulsionnelle du canal de transmission, en fonction des informations délivrées par le processus itératif d'égalisation et de décodage.

Les étapes réalisées par itération sont répétées à l'itération suivante.

Le procédé et le système objets de la présente invention trouvent application à la réception en téléphonie mobile, lorsque la moduation du canal est une modulation de type GMSK ou M-aire, en particulier aux systèmes GSM et EDGE pour *Enhanced Data Rates for GSM Evolution.*

Ils seront mieux compris à la lecture de la description et à l'observation des dessins ci-après dans lesquels, outre les figures 1a à 1d relatives à des éléments connus de l'art antérieur :

- la figure 2a représente, à titre illustratif, un organigramme général des étapes permettant la mise en oeuvre du procédé objet de la présente invention ;
- la figure 2b représente, à titre illustratif, un organigramme spécifique de mise en oeuvre d'un processus d'échange d'information a priori entre processus d'égalisation et de décodage, et réciproquement ;

- la figure 2c représente, à titre illustratif, un organigramme spécifique de mise en oeuvre du procédé objet de la présente invention dans un mode de réalisation particulier dans lequel le processus d'égalisation utilisé est un processus de type DDFSE couplé à une réestimation de type *bootstrap ;*
- la figure 2d représente, à titre illustratif, une variante de mise en oeuvre du procédé objet de la présente invention, tel qu'illustré en figure 2c, dans lequel une méthode de calcul de CEPSTRE est utilisée ;
- la figure 2e représente, à titre illustratif, un organigramme spécifique de mise en oeuvre d'un processus de réestimation actualisée des coefficients de la réponse impulsionnelle du canal de transmission de type *bootstrap ;*
- la figure 2f représente, à titre illustratif, un organigramme spécifique de mise en oeuvre du procédé objet de la présente invention dans un mode de réalisation particulier dans lequel le processus d'égalisation utilisé est un processus de Viterbi à entrées pondérées SISO MLSE couplé à une réestimation par processus itératif EM ;
- la figure 3a représente, à titre illustratif, un schéma fonctionnel de mise en oeuvre d'un système conforme à l'objet de la présente invention ;
- la figure 3b représente, à titre illustratif, une première variante de mise en oeuvre spécifique du système objet de l'invention représenté en figure 3a dans le cas où l'égaliseur SISO est un égaliseur SISO MLSE, le décodeur SISO est un décodeur SISO BCJR et l'estimateur itératif de canal un estimateur EM itératif ;
- la figure 3c représente, à titre illustratif, une deuxième variante de mise en oeuvre du système objet de l'invention représenté en figure 3a dans le cas où l'égaliseur est un égaliseur SISO DDFSE, le décodeur un décodeur SISO BCJR et l'estimateur itératif de canal un estimateur de type *bootstrap ;*
- la figure 3d représente, à titre illustratif, un troisième variante de mise en oeuvre du système objet de l'invention représenté en figure 3a dans le cas où l'égaliseur est un égaliseur GSOVA, le décodeur un décodeur SISO BCJR et l'estimateur itératif de canal un estimateur de type *bootstrap ;*
- les figures 4a, 4b et 4c représentent des diagrammes de simulation de mise en oeuvre du procédé objet de la présente invention, représentant la valeur du taux d'erreur binaire BER (*Binary Error Rate*) en fonction du rapport signal à bruit exprimé en dB pour une réestimation des coefficients de la réponse impulsionnelle par le processus bootstrap dans le cadre d'une modulation MDP8 ou MCS5 appliquée au GSM évolué EDGE, respectivement d'une modulation GMSK pour *Gaussian Minimum Shift Keying,* appliquée au GSM.

Préalablement à une description du procédé et du système de détection et de décodage itératif de symboles par réestimation des coefficients du canal de transmission, objets de la présente invention, différents rappels relatifs à des éléments de l'art antérieur seront donnés ci-après en liaison avec les figures 1b à 1d.

Pour un récepteur standard, de type GSM ou EDGE, les notations associées à la chaîne de communication numérique en bande de base sont les suivantes :

- $\overline{u} = \{u_i\}$ désigne la séquence des symboles binaires à transmettre ;
- $\overline{c} = \{c_i\}$ désigne la séquence des symboles binaires codés délivrée par le codeur de canal de type convolutif, le codage de canal ayant pour objet d'introduire une redondance dans la séquence des bits et des symboles transmis ;
- $\overrightarrow{x} = \{x_i\}$ désigne la séquence des symboles produite après modulation par le modulateur, le modulateur étant un modulateur de type M-PSK et la séquence de symboles, à titre d'exemple non limitatif, étant constituée par une séquence de symboles MDP8, la séquence de symboles modulée étant obtenue à partir de la séquence de symboles codés soumise à entrelacement, l'entrelacement étant noté $\Pi$ ; on rappelle que le processus de modulation précité fait correspondre un point de la constellation tel que représenté en figure 1b à tout triplet de bits consécutifs qui doivent être soumis à transmission ;
- $\overline{z} = \{z_i\}$ désigne la séquence des symboles complexes en bande de base associée à chaque symbole délivré par le modulateur PSK, à chaque séquence de symboles MPD8, notée $\overline{x}$, correspondant la séquence des symboles complexe $\overline{z}$.

On rappelle que les séquences codées émises sont de longueur binaire m x 114 x 3 bits de queue, ou *tail-bits* en langage anglo-saxon, étant inclus. Après entrelacement de canal, opération $\Pi$, les séquences sont segmentées en m paquets de symboles de type EDGE ou GSM, chaque paquet étant constitué chacun de 114 symboles MDP8 utiles auxquels sont ajoutés 26 symboles de la séquence d'apprentissage, en général symboles de type CAZAC, 6 symboles de queue répartis en deux fois 3 symboles de queue, et 9 symboles de garde, ainsi que représenté en figure 1c.

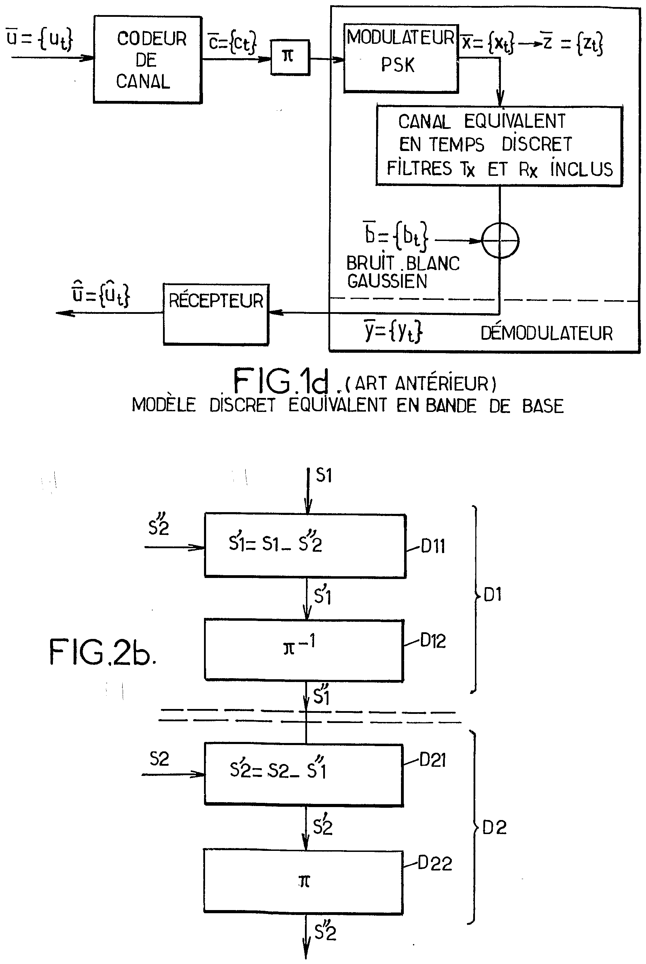

La figure 1d reprend le modèle discret équivalent en bande de base pour la transmission des paquets de symboles EDGE ou GSM précités.

Les paquets de symboles précités sont filtrés par la réponse impulsionnelle de la GMSK linéarisée et le signal correspondant est ensuite transmis sur le canal radiosélectif en fréquence, lequel peut être modélisé par un canal équivalent multi-trajet de Rayleigh. Sur la figure 1d, le canal équivalent en temps discret est réputé comporter les filtres $T_X$ et $R_X$. En outre, un bruit blanc Gaussien de densité spectrale constante sur la bande occupée par le filtre d'émission doit être pris en compte. Le filtre de réception du démodulateur est un filtre en racine de Nyquist de *roll-off* (coefficient relatif à l'occupation spectrale) $\alpha = 0,5$. Le démodulateur synchronise et décime le signal suréchantillonné reçu au temps symbole.

Le modèle équivalent à temps (symbole) discret représenté en figure 1d est tel que le démodulateur délivre une suite d'échantillons, notée $\overline{y}=\{y_t\}$, les échantillons $y_t$ délivrés pouvant s'écrire sous la forme d'une convolution discrète, selon la relation :

$$y_t = \sum_{j=0}^{K_{ch}-1} h_j z_{t-j} + b_t$$

Dans cette relation :

- $\{h_j\}_j$ désigne les coefficients complexes du canal discret équivalent correspondant à la convolution du filtre d'émission du canal et du filtre de réception ;
- $\overline{z}=\{z_t\}$ désigne la séquence des symboles délivrés par le modulateur MDP8 avant filtrage, sous leur forme complexe ;
- $K_{ch}$ désigne la longueur de contrainte du canal discret équivalent ;
- $b_t$ désigne un échantillon de bruit blanc Gaussien, le filtrage en racine de Nyquist garantissant l'opération de blanchissement.

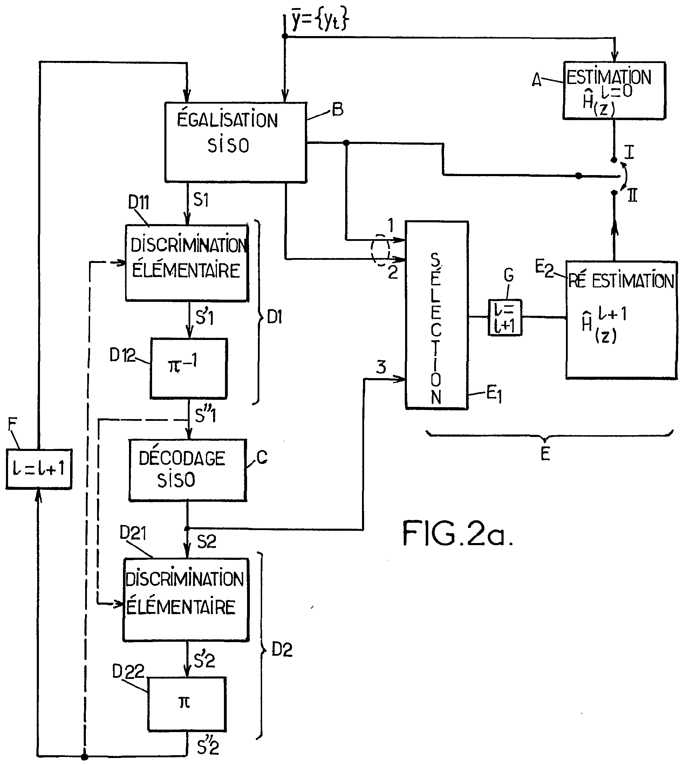

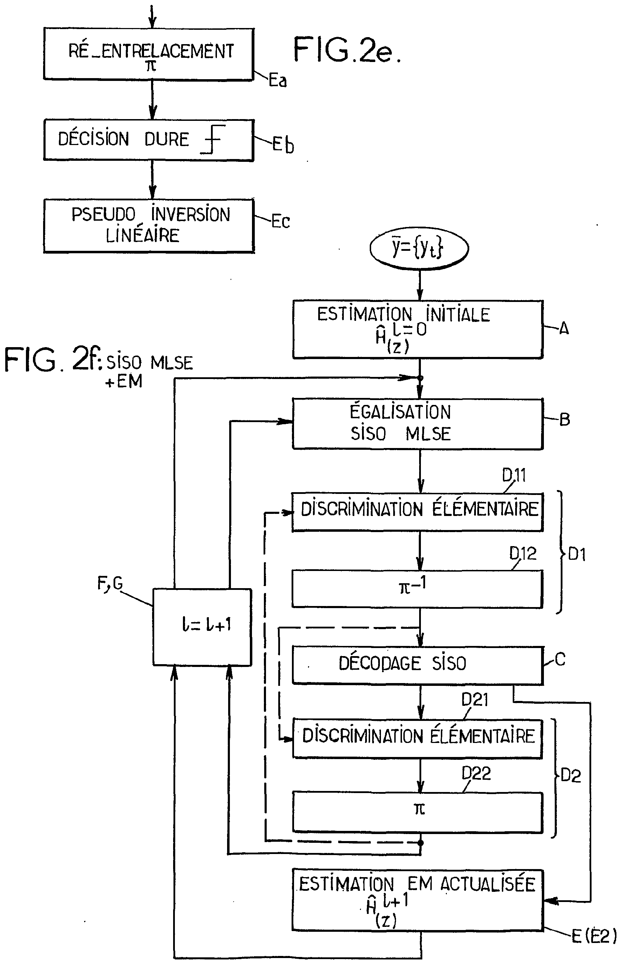

Une description plus détaillée du procédé de détection et de décodage itératif de symboles reçus couplé à une réestimation de coefficients du canal de transmission conforme à l'objet de la présente invention, sera maintenant donnée en liaison avec la figure 2a.

D'une manière générale, on rappelle que les symboles sont transmis à partir d'une séquence de symboles binaires, chaque séquence de symboles reçus étant ainsi codée et entrelacée et comportant au moins, outre les symboles de données, de garde et de queue, des symboles d'apprentissage spécifiques, ainsi que représenté sur la figure 1c.

En référence à la figure 2a, on indique que le procédé objet de la présente invention consiste, préalablement à tout itération, à effectuer, en une étape A, une estimation linéaire initiale des coefficients de la réponse impulsionnelle du canal de transmission $\hat{H}_{(z)}^{l=0}$ à partir des symboles d'apprentissage spécifiques transmis.

Sur la figure 2a, l'opération d'estimation initiale A correspond, du point de vue de la transmission des données issues de l'estimation, en une position de commutation I pour la transmission de ces données vers le processus d'égalisation. Ainsi, l'estimation est effectuée à partir de la séquence des symboles reçus $\overline{y}$ destinés au récepteur. Les symboles d'apprentissage, symboles CAZAC, étant connus en tant que tels, il est ainsi possible, à partir d'une comparaison des symboles connus à l'émission et de la séquence CAZAC incorporée dans les paquets de symboles transmis, vis-à-vis des symboles et des paquets de symboles reçus correspondants, de déterminer par estimation linéaire des coefficients de la réponse impulsionnelle du canal de transmission préalablement à tout itération. L'opération d'estimation linéaire initiale est, pour cette raison, notée $\hat{H}_{(z)}^{l=0}$.

Suite à l'opération d'estimation initiale précitée, le procédé objet de la présente invention consiste à soumettre le processus d'égalisation et de décodage à un processus itératif d'échange d'information a priori entre ces deux processus.

Sur la figure 2a, le processus d'égalisation est noté B et le processus de décodage est noté C.

D'une manière générale, on indique que le processus d'égalisation et le processus de décodage, référencés B et C, sont des processus d'égalisation et de décodage à entrées et sorties pondérées, lesquelles, pour cette raison, sont désignés par égalisation SISO, respectivement décodage SISO, pour égalisation Soft-Input *Soft-Output* et décodage *Soft-Input Soft-Output* respectivement.

D'une manière plus spécifique, on indique que différents processus d'égalisation SISO, respectivement de décodage SISO peuvent être utilisés sans sortir du cadre de mise en oeuvre du procédé objet de la présente invention.

D'une manière générale, on indique que le processus itératif d'échange d'information a priori est mis en oeuvre, d'une part, sur les bits de symboles pour le processus d'égalisation, bits de symboles en provenance du processus de décodage et, d'autre part, sur les bits codés pour le processus de décodage, bits codés en provenance du processus d'égalisation.

Ce double échange d'information a priori est représenté par les flèches en pointillés sur la figure 2a et sera explicité de manière plus détaillée ultérieurement dans la description.

Le processus itératif d'échange d'information a priori consiste à discriminer la contribution du canal de transmission de la contribution du décodage pour obtenir les informations a priori précitées. Les opérations de discrimination correspondantes sont notées $D_1$ et $D_2$ respectivement sur la figure 2a.

Enfin, et dans le cadre de l'itération précitée, le procédé objet de la présente invention consiste en outre à effectuer une réestimation itérative actualisée des coefficients de la réponse impulsionnelle du canal de transmission à l'étape E en fonction des informations délivrées par le processus itératif d'égalisation et de décodage.

Pour la réalisation de cette réestimation itérative actualisée des coefficients de la réponse impulsionnelle du canal de transmission, on indique que les informations délivrées par le processus itératif d'égalisation et de décodage peuvent être soumises à une opération de sélection $E_1$, suivie d'une opération de réestimation proprement dite $E_2$, la réestimation proprement dite consistant à réestimer les coefficients de la réponse impulsionnelle du canal de transmission $\hat{H}_{(z)}^{1+1}$ pour chaque itération de rang 1+1. Pour cette opération d'itération, la commutation des données obtenues du fait de la réestimation proprement dite à l'étape $E_2$ est effectuée sur la position 1,2 représentée en figure 2a le cas échéant 3, afin de permettre la mise en oeuvre du processus d'égalisation SISO à l'étape B à partir de ces nouvelles données réestimées.

En ce qui concerne le processus de réestimation itérative actualisée en fonction des informations délivrées par le processus itératif d'égalisation B et de décodage C, on indique que différents modes de réalisation correspondant aux positions de sélection 1,2 et 3 de la figure 2a seront décrites ultérieurement dans la description. Ces modes de sélection des données d'entrée de réestimation sont fonction, d'une part, du type d'égalisation utilisé, et, d'autre part, du type de réestimation mis en oeuvre, ainsi qu'il sera décrit ultérieurement dans la description.

Le caractère itératif, d'une part, de l'échange d'information a priori entre le processus d'égalisation B et le processus de décodage C est représenté par l'étape F de passage de l'itération 1 à l'itération 1+1, et le caractère itératif de la réestimation itérative E est représenté, d'autre part, par l'étape G de passage de l'itération 1 à l'itération 1+1.

Une description plus détaillée d'un mode de mise en oeuvre spécifique d'un processus itératif d'échange d'information a priori entre processus d'égalisation et processus de décodage B, C, sera maintenant décrit en liaison avec la figure 2b. Ce mode de mise en oeuvre peut être réalisé quelque soit le processus d'égalisation et de décodage utilisé, ainsi qu'il sera décrit ultérieurement dans la description.

Ainsi que représenté sur la figure 2b précitée, le processus itératif d'échange d'information a priori consiste à discriminer la contribution du canal de transmission de la contribution du décodage. Cette discrimination consiste, d'une part, en un processus de discrimination $D_1$ dans lequel on soustrait de la séquence de sortie pondérée sur bits de symboles égalisés, séquence notée $S_1$, issue du processus d'égalisation B, l'information a priori $S''_2$ sur les bits de symboles pour engendrer une séquence ou information extrinsèque notée $S'_1$.

La séquence extrinsèque $S'_1$ est alors soumise à un processus de désentrelacement noté $\Pi^{-1}$ pour engendrer une séquence d'entrée pondérée, notée $S''_1$ contenant l'information en provenance du canal et l'information a priori sur les bits codés en provenance de l'égalisation. Sur les figures 2a et 2b, l'étape de soustraction désignée par étape de discrimination élémentaire est notée $D_{11}$. L'étape de désentrelacement est notée $D_{12}$.

En outre, le processus itératif d'échange d'information a priori consiste dans une étape de discrimination $D_2$ à soustraire à la séquence de sortie pondérée sur bits décodés $S_2$, délivrée par le processus de décodage SISO C, la séquence d'entrée pondérée $S''_1$ en entrée du processus de décodage C pour engendrer une séquence d'information extrinsèque sur bits décodés, notée $S'_2$. L'étape de soustraction précitée correspondant à une étape de discrimination élémentaire porte la référence $D_{21}$ sur la figure 2b et sur la figure 2a.

La séquence d'information extrinsèque sur bits décodés $S'_2$ est ensuite soumise à un processus de réentrelacement pour engendrer l'information a priori $S''_2$ sur les bits de symbole précédemment mentionnée dans la description, cette étape de réentrelacement $\Pi$ portant la référence $D_{22}$ sur la figure 2a et la figure 2b.

Le procédé de détection et de décodage itératif de symboles codés et entrelacés, objet de la présente invention, peut être mis en oeuvre à partir de différents processus d'égalisation spécifiques et de différents processus de réestimation, lesquels seront décrit ci-après dans la description. En ce qui concerne le code de canal utilisé à l'émission, celui-ci peut être un code convolutif ou une combinaison de codes linéaires, série, parallèle, hybrides. En ce qui concerne le processus de décodage, tout processus de décodage adapté au processus de codage peut être utilisé. Le décodage peut lui-même être itératif.

De manière plus spécifique, le procédé de détection et de décodage itératif selon l'invention consiste pour chaque itération, après une estimation linéaire initiale des coefficients de la réponse impulsionnelle du canal de transmission, pour chaque itération courante :

- à effectuer une égalisation sous-optimale opérant sur un treillis de canal réduit en nombre d'états à partir d'une information a priori sur les bits de symbole issue du décodage de l'itération antérieure ;
- à effectuer un décodage à entrées et sorties pondérées à partir d'une information a priori sur les bits codés en provenance de l'opération d'égalisation sous-optimale de l'itération courante.

La réestimation itérative des coefficients de la réponse impulsionnelle du canal de transmission est effectuée et actualisée en fonction des informations délivrées par le processus itératif d'égalisation sous-optimale et de décodage.

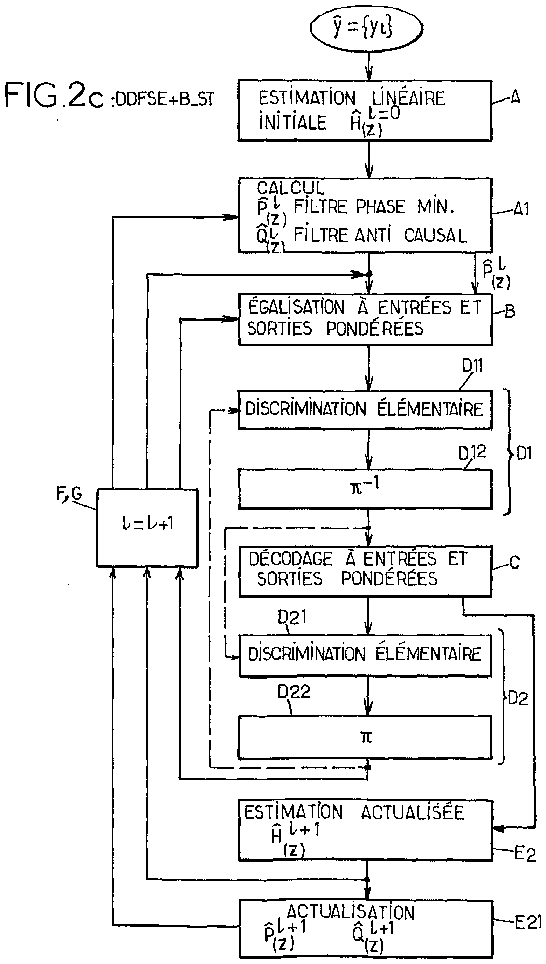

D'une manière générale, ainsi que représenté en figure 2c, le processus d'égalisation peut être constitué par un processus DDFSE à entrées/sorties pondérées couplé à une réestimation de type *bootstrap,* B-ST.

Sur la figure 2c, les mêmes étapes que celles réalisées à la figure 2a portent les mêmes références.

Dans le cadre de la mise en oeuvre du procédé objet de la présente invention en liaison avec la figure 2c, on indique que le processus d'égalisation est un processus de type DDFSE dans lequel un seul survivant par noeud est retenu.

Dans ces conditions, le procédé objet de la présente invention consiste en outre, préalablement à toute itération, à calculer, en une étape $A_1$, à partir de l'estimation linéaire initiale réalisée à l'étape A pour les coefficients de la réponse impulsionnelle du canal de transmission, un filtre à phase minimale $\hat{P}^l_{(z)}$, respectivement un filtre anticausal $\hat{Q}^l_{(z)}$, les filtres à phase minimale et anticausal vérifiant la relation :

$$H^l_{(z)} * \hat{Q}^l_{(z)} = \hat{P}^l_{(z)}$$

Préalablement à toute itération, le filtre $\hat{P}^{l=0}_{(z)}$ est défini comme un canal de transmission à phase minimale initial.

En outre, le procédé objet de la présente invention, en référence à la figure 2c, consiste par itération, à soumettre la séquence de symboles reçus au processus d'égalisation conditionnellement aux valeurs du filtre à phase minimale $\hat{P}^l_{(z)}$ défini comme un canal de transmission à phase minimale successif pour l'itération courante, c'est-à-dire l'itération de rang 1 = l+1 successivement.

En outre, le procédé objet de la présente invention consiste, à partir de l'estimation linéaire actualisée $\hat{H}^{l+1}_{(z)}$ pour l'itération suivante à effectuer une actualisation du filtre $\hat{P}^{l+1}_{(z)}$ à phase minimale défini comme un canal de transmission à phase minimale successif et du filtre anticausal $\hat{Q}^{l+1}_{(z)}$ associé à ce dernier.

L'opération d'actualisation des filtres à phase minimale $\hat{P}^{l+1}_{(z)}$ et $\hat{Q}^{l+1}_{(z)}$ est représentée à l'étape $E_{21}$ de la figure 2c.

Le caractère itératif de cette itération est représenté par l'étape G, pour laquelle l = 1+1, le caractère itératif de l'estimation des coefficients de la réponse impulsionnelle du canal de transmission, d'une part, et de l'échange d'information a priori entre les processus d'égalisation et de décodage B, C, étant également représenté par la même opération désignée par l'étape F.

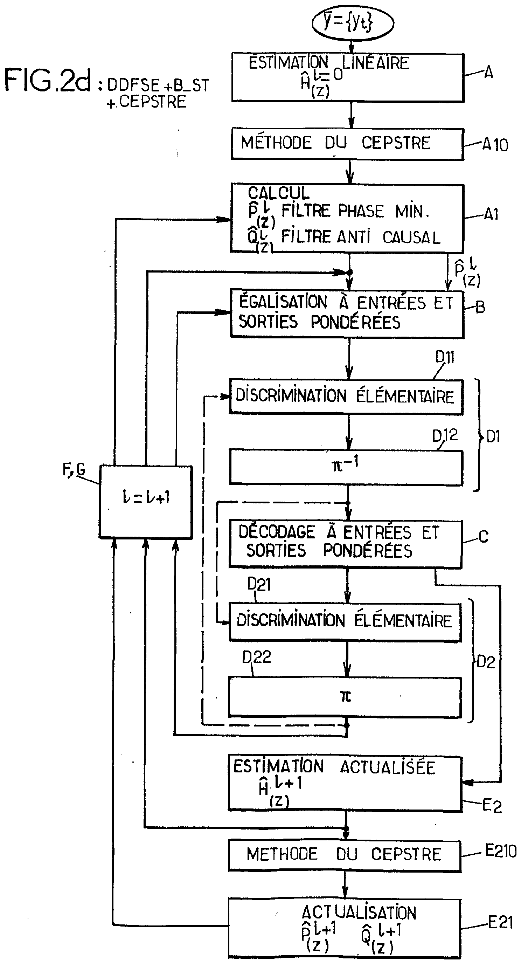

En ce qui concerne la mise en oeuvre des étapes $A_1$ de calcul du filtre à phase minimale et de filtre anticausal, respectivement de l'actualisation des valeurs de ces filtres à l'étape $E_{21}$ représentée en figure 2c, on indique que ces étapes de calcul peuvent être effectuées par la méthode du CEPSTRE, laquelle sera décrite ultérieurement de manière plus détaillée dans la description, cette méthode de calcul, ainsi que représenté en figure 2d, consistant, en une étape $A_{10}$ respectivement $E_{210}$, en un mode de calcul spécifique à partir d'une transformée de Fourier rapide à 256 coefficients par exemple.

En ce qui concerne l'étape E consistant à effectuer une estimation actualisée des coefficients de la réponse impulsionnelle du canal de transmission pour l'itération suivante, et en particulier dans le cas du processus de type *bootstrap* précédemment mentionné, celle-ci consiste, ainsi que représenté en figure 2e, à soumettre la séquence de sortie pondérée sur bits décodés, c'est-à-dire en sortie du processus de décodage, à un processus de réentrelacement, noté $E_a$, puis à soumettre le flux de la séquence de sortie pondérée réentrelacée issue de l'étape $E_a$ à une décision dure pour reconstituer les symboles reçus, cette opération étant notée $E_b$ sur la figure 2e précitée, et, enfin, à soumettre les symboles reçus reconstitués à un processus de pseudo-inversion linéaire sur la totalité des symboles reçus reconstitués, cette opération étant notée $E_c$ sur la figure 2e.

Le mode de mise en oeuvre du procédé objet de la présente invention n'est pas limité à l'exemple de processus

EP 1 282 968 B1

d'égalisation tel que le DDFSE précédemment décrit en liaison avec les figures 2c à 2e.

En effet, dans le cadre de la mise en oeuvre d'une réestimation de type *bootstrap,* il est également possible de prévoir la mise en oeuvre d'un processus d'égalisation différent du processus DDFSE. Ainsi, un autre processus d'égalisation peut être mis en oeuvre tel que le processus désigné par GSOVA, pour *Generalized Soft Viterbi Algorithm,* lequel consiste en un processus DFSE dans lequel est retenu plus d'un survivant par noeud.

Cette technique permet de combattre efficacement la propagation d'erreur bien connue pour le processus de type DDFSE, lequel nécessite d'ailleurs, pour cette raison, la mise en oeuvre d'un filtre adapté de blanchissement du signal.

Le processus GSOVA ne nécessite pas l'introduction d'un tel filtrage mais présente l'inconvénient majeur de ne pas se prêter à un calcul de type aller-retour, *"forward backward",* pour le calcul des sorties souples du processus d'égalisation à sorties pondérées. Toutefois, d'autres processus de calcul peuvent être mis en oeuvre pour le calcul des sorties pondérées précitées, ces processus de calcul ne nécessitant qu'un seul passage avant *"forward",* par exemple le processus SOVA.

Pour la description des processus GVA, pour *Generalized Viterbi Algorithm* et GSOVA, on pourra utilement se reporter à la publication intitulée A List-type reduced Constraint Generalization of the Viterbi Algorithm" publiée par T. HASHIMOTO, IEEE Trans. Info Theory vol.33, pp.866-876, Nov.1987, respectivement à la publication intitulée "A Viterbi Algorithm with soft Decision Outputs and its Applications", publiée par J. HAGUENAUER et P. HOEHER, Globcom 89, Dallas, USA, pp. 1680-1686.

Enfin, on indique que l'étape consistant à effectuer une estimation actualisée des coefficients de la réponse impulsionnelle du canal de transmission pour l'itération suivante peut consister à effectuer une itération de type EM, pour *Expectation Maximization,* utilisant les probabilités a posteriori sur les états du treillis associés au modèle Markovien du canal IES de transmission produites par le processus d'égalisation à l'itération courante, ainsi que la valeur estimée courante des coefficients de la réponse impulsionnelle du canal de transmission $\hat{H}^1_{(z)}$. Pour une description plus détaillée de l'itération de type EM, on pourra utilement se reporter à l'article intitulé "SEMIBLIND MAXIMUM A POSTERIORI MULTIPATH FAST FADING CHANNEL ESTIMATION FOR TDMA SYSTEMS" publié par Mohamed SIALA, Rafael BRU GIBERT, IEEE VTS, 50th Vehicular Technology Conference, Amsterdam, The Netherlands, September 19-22, 1999.

En particulier, on indique que la mise en oeuvre de l'estimation actualisée précitée par itération EM et l'utilisation des probabilités a posteriori sur les états du treillis produites par le processus d'égalisation à l'itération courante ainsi que la valeur estimée courante des coefficients de la réponse impulsionnelle du canal de transmission correspond avantageusement à la sélection des positions 1,2 sur la figure 2a, alors que par exemple, la mise en oeuvre de l'étape d'estimation actualisée des coefficients de la réponse impulsionnelle du canal de transmission par le processus de type *bootstrap* correspond à la sélection de la position 3 sur la même figure 2a précitée.

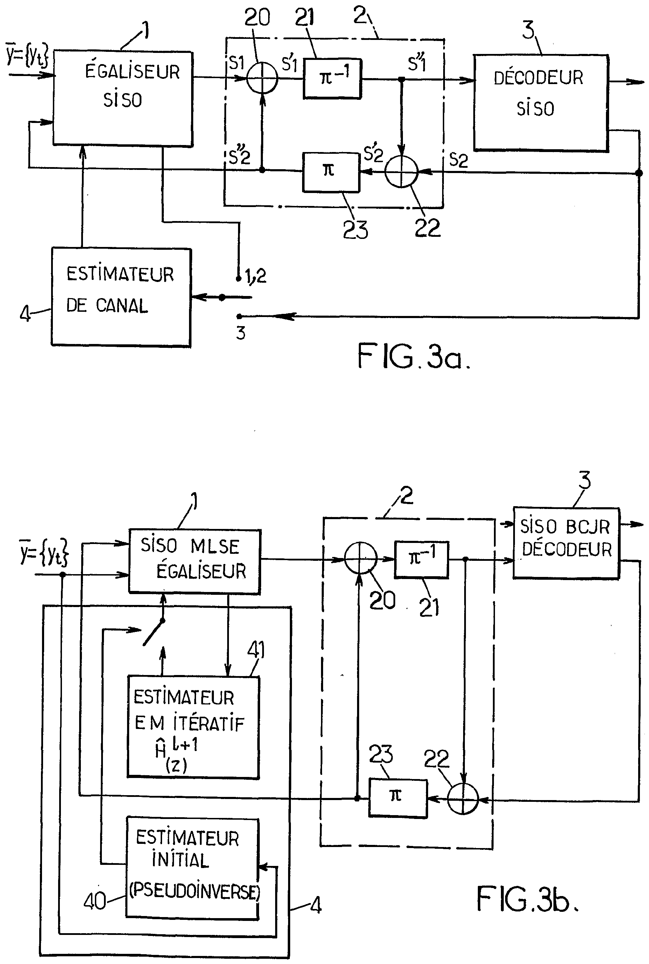

Une description plus détaillée d'une mise en oeuvre d'un système de détection et de décodage itératif de symboles codés et entrelacés transmis sur un canal de transmission couplé à un processus de réestimation des coefficients de ce canal sera maintenant donnée en liaison avec les figures 3a à 3d et les figures suivantes.

En référence à la figure 3a, on indique que le système objet de la présente invention reçoit la séquence des symboles reçus, notée $\bar{y}=\{y_t\}$. La séquence de symboles reçus est conforme au format décrit précédemment dans la description et constituée de paquets de symboles tels que représentés en figure 1c.

Ainsi qu'on l'observera sur la figure 3a, le système objet de 1a présente invention comporte un module 1 d'égalisation à entrées et sorties souples, noté égaliseur SISO, recevant la séquence des symboles reçus et délivrant une séquence de sorties pondérées sur bits de symboles égalisés, notée $S_1$.

En outre, le système objet de l'invention comporte un module 2 de calcul et d'échange itératif d'information a priori, cette information a priori étant calculée, d'une part, sur les bits symboles en provenance des bits symboles décodés, c'est-à-dire sur une séquence $S_2$ délivrée par le processus de décodage, cette information a priori étant destinée au processus d'égalisation et délivrée selon une séquence $S''_2$ à l'entrée du module 1 d'égalisation à entrées et sorties souples précité. Le module de calcul et d'échange d'information a priori permet d'autre part de calculer une information a priori sur les bits codés, selon une séquence $S''_1$ représentative de cette information a priori en provenance des bits de symboles égalisés, c'est-à-dire de la séquence $S_1$, l'information a priori sur bits codés $S''_1$ étant destinée au processus de décodage et délivrée comme variable d'entrée au processus de décodage précité.

Le système objet de l'invention tel que représenté en figure 3a comprend enfin un module 3 de décodage à entrées et sorties souples, noté décodeur SISO, recevant l'information a priori représentée par la séquence $S''_1$ sur les bits codés et délivrant la séquence de sorties pondérées sur bits décodés, notée $S_2$, issue du processus de décodage et donc délivrée par le module 3 de décodage à entrées et sorties souples.

Enfin, on indique que le système objet de la présente invention comporte avantageusement un module 4 d'estimation itérative actualisée des coefficients de la réponse impulsionnelle du canal de transmission en fonction des informations délivrées par le processus itératif d'égalisation et de décodage.

On comprend en particulier que le module 4 d'estimation itérative actualisée des coefficients de la réponse impulsionnelle du canal de transmission reçoit des informations du module égaliseur 1 ou du module décodeur 3 selon la sélection et le choix du type d'égaliseur, respectivement de décodeur utilisé à entrées/sorties pondérées, cette sélection correspondant aux positions 1, 2, respectivement 3 de la figure 2a et étant représentée symboliquement sur la figure 3a précitée par un élément de commutation entre les positions précédemment mentionnées.

Du point de vue du fonctionnement du système objet de la présente invention, on indique que le calcul et l'échange de l'information a priori sur les bits codés représentés sur la séquence $S''_1$ délivrée à l'entrée du module décodeur SISO portant la référence 3, respectivement l'information a priori sur les bits symboles représentés par la séquence $S''_2$ délivrée à l'entrée du module égaliseur 1 SISO en provenance des bits symboles décodés délivrés par le module décodeur 3, permet d'améliorer les performances, d'une part, du module égaliseur SISO 1 et, d'autre part, du module décodeur SISO 3. Cette amélioration est obtenue grâce, en particulier, au processus d'itération réalisé auquel est couplé la réestimation des coefficients de la réponse impulsionnelle du canal de transmission en fonction des informations délivrées par le processus itératif d'égalisation et de décodage, dans les conditions spécifiques au choix du type de processus d'égalisation et de module égaliseur SISO, respectivement du processus de décodage et du module décodeur 3 SISO finalement choisi pour la mise en oeuvre du procédé et du dispositif objets de la présente invention. Bien entendu, le type de processus et de module d'estimation itérative actualisée des coefficients de la réponse impulsionnelle du canal de transmission est lié au choix du type de module égaliseur, respectivement de module décodeur SISO finalement retenu.

Un mode de mise en oeuvre préférentiel non limitatif du module 2 de calcul et d'échange itératif d'information a priori sera maintenant décrit en liaison avec la même figure 3a.

Ainsi que représenté sur la figure précitée, on indique que le module 2 de calcul et d'échange itératif d'information a priori peut comporter avantageusement un premier module 20 de soustraction à la séquence de sorties pondérées sur bits de symboles égalisés $S_1$ délivrée par le module égaliseur SISO 1 de l'information a priori $S''_2$ sur les bits de symboles issue du processus de décodage, le premier module 20 de soustraction permettant d'engendrer une séquence extrinsèque, notée $S'_1$, cette séquence extrinsèque correspondant en fait à une information a priori potentielle en provenance des bits de symboles égalisés. On comprend en effet que la séquence $S'_1$ représente cette information a priori potentielle en raison du processus d'entrelacement à l'émission de la séquence des bits de symboles transmis et finalement reçus.

Le module 2 de calcul et d'échange itératif comporte également un module 21 de désentrelacement de la séquence extrinsèque $S'_1$ représentant l'information a priori potentielle précitée, le module 21 de désentrelacement, noté $\Pi^{-1}$ permettant d'engendrer la séquence d'entrées pondérées $S''_1$ contenant l'information en provenance du canal et l'information a priori sur les bits codés en provenance de l'égalisation.

En outre, le module 2 de calcul et d'échange itératif d'information comprend un deuxième module 22 de soustraction à la séquence de sorties pondérées sur bits décodés $S_2$ délivrée par le module décodeur SISO 3 de la séquence d'entrées pondérées $S''_1$ précitée, le deuxième module 22 de soustraction permettant d'engendrer une séquence d'information extrinsèque sur bits décodés, notée $S'_2$, laquelle représente une information a priori potentielle sur bits décodés compte tenu du processus de désentrelacement nécessaire à l'opération de décodage.

Enfin, le module 2 de calcul et d'échange itératif d'information a priori comporte un module 23 de réentrelacement, noté $\Pi$, recevant la séquence d'information extrinsèque $S'_2$ sur bits décodés et permettant d'engendrer l'information a priori $S''_2$ sur les bits de symboles, laquelle est délivrée, d'une part, au module égaliseur SISO 1 et, d'autre part, bien entendu, en boucle au premier module soustracteur 20.

Dans le cas du mode de réalisation représenté en figure 3a du module 2 de calcul et d'échange itératif d'information a priori, on indique que le calcul de l'information a priori représentée par les séquences $S''_1$, respectivement $S''_2$ délivrées au module décodeur SISO, respectivement au module égaliseur SISO, sont symétriques et que toute itération réalisée sur le calcul des informations a priori précitées permet finalement de renforcer et affiner les performances de l'égaliseur 1 et du décodeur 3 SISO finalement mis en oeuvre.

Un premier mode de mise en oeuvre spécifique non limitatif d'un système objet de la présente invention sera maintenant décrit en liaison avec la figure 3b dans le cas où, d'une part, le module égaliseur SISO 1 est constitué par un module d'égalisation MLSE à entrées/sorties souples et le module décodeur SISO 3 est constitué par un module de décodage BCJR à entrées/sorties souples et où le module 4 d'estimation itérative actualisée comprend un module 40 d'estimation initiale des coefficients de la réponse impulsionnelle du canal de transmission, ainsi qu'un module 41 d'estimation itérative actualisée de type EM, pour *Expectation Maximization* des coefficients de la réponse impulsionnelle du canal de transmission.

En ce qui concerne le module égaliseur 1, celui-ci peut être constitué par un module égaliseur de type MLSE à sorties et entrées pondérées, et donc de type SISO.

Dans ces conditions, le canal discret équivalent tel que représenté en figure 1d, mais compte tenu du choix du module égaliseur et du module décodeur, peut être vu comme un code convolutif non récursif non systématique, variant dans le temps, et de longueur de contrainte $K_{ch}$, cette longueur de contrainte représentant le nombre de coefficients du canal discret.

Dans ces conditions, on associe au canal discret correspondant générateur d'interférences entre symboles IES un treillis régulier associé au modèle Markovien de ce canal, ce treillis étant noté $T_{ch}(S,B,\vartheta)$. Chaque branche ou transition $b \in B$ de ce treillis à une section temporelle t comporte trois champs :

- l'état de départ s' $\in$ S ;
- l'état d'arrivée s $\in$ S ;
- une séquence binaire entrante, notée $\overline{\vartheta}(b) = \{x_{(t,i)}\}_{i \in [1, \log 2M]}$ représentée en un entier, symbole de modulation.

Pour une itération courante de rang l et conditionnellement à une estimée $\hat{H}_{(z)}^{(l)}$ des coefficients du canal de transmission, le module égaliseur à maximum de vraisemblance à entrées et sorties pondérées 1 de type SISO MLSE calcule un rapport approché de probabilités a posteriori sur chaque bit de chaque symbole de type M-aire de modulation, vérifiant la relation (1) :

$$L_{soft}^{(l)}\left(x_{l,i}\right) = \ln \frac{\Pr\left\langle x_{l,i} = 1 \middle| \overline{y}; \hat{H}_{(z)}^{(l)} \right\rangle}{\Pr\left\langle x_{l,i} = 0 \middle| \overline{y}; \hat{H}_{(z)}^{(l)} \right\rangle} = \ln \frac{\displaystyle\max_{b \in B, \vartheta_i^{(b)} = 1} \Pr\left(b, \overline{y}; \hat{H}_{(z)}^{(l)}\right)}{\displaystyle\max_{b \in B, \vartheta_i^{(b)} = 0} \Pr\left(b, \overline{y}; \hat{H}_{(z)}^{(l)}\right)} \qquad (1)$$

Dans cette relation, $\overline{y}$ représente la séquence complexe des symboles reçus de longueur $\tau_{ch}$ et Pr<.|.> représente la probabilité conditionnelle à la connaissance des symboles reçus et des paramètres du canal.

Toute probabilité conjointe $\Pr\left(b, \overline{y}; \hat{H}_{(z)}^{(l)}\right)$ associée à la transition $b = (s_{t-1} = s', \overline{\vartheta}(b), s_1 = s)$ peut être décomposée en un produit de trois densités de probabilités, selon la relation (2) :

$$\Pr\left(b, \overline{y}; \hat{H}_{(z)}^{(l)}\right) \propto \alpha_{l-1}\left(s'; \hat{H}_{(z)}^{(l)}\right) \gamma_t\left(s, s'; \hat{H}_{(z)}^{(l)}\right) \beta_l\left(s; \hat{H}_{(z)}^{(l)}\right) \qquad (2)$$

où :

$$\alpha_l\left(s; \hat{H}_{(z)}^{(l)}\right) = p\left(s_1 = s, \overline{y}_{1 \to l}; H_{(z)}^{(l)}\right)$$

$$\beta_l\left(s; \hat{H}_{(z)}^{(l)}\right) = p\left\langle \overline{y}_{l+1 \to \tau c} \middle| s_1 = s; \hat{H}_{(z)}^{(l)} \right\rangle$$

$$\gamma_l\left(s, s'; \hat{H}_{(z)}^{(l)}\right) = p\left\langle s_1 = s, y_l \middle| s_{l-1} = s'; \hat{H}_{(z)}^{(l)} \right\rangle$$

Le module 1 égaliseur SISO MLSE calcule alors récursivement les densités de probabilités $\alpha_{l-1}(s'; \hat{H}_{(z)}^{(l)})$ et $\beta_l\left(s; \hat{H}_{(z)}^{(l)}\right)$ en utilisant une double récursion aller-retour selon la relation (3) :

$$\alpha_l\left(s;\hat{H}^{(l)}_{(z)}\right) = \max_{s'\in S} \gamma_l\left(s,s';\hat{H}^{(l)}_{(z)}\right)\alpha_{l-1}\left(s';\hat{H}^{(l)}_{(z)}\right)$$

$$(3)$$

$$\beta_l\left(s;\hat{H}^{(l)}_{(z)}\right) = \max_{s'\in S} \gamma_{l+1}\left(s',s;\hat{H}^{(l)}_{(z)}\right)\beta_{l+1}\left(s';\hat{H}^{(l)}_{(z)}\right)$$

Pour les transitions existantes, l'expression des métriques est alors donnée par la relation (4) :

$$\gamma_l\left(s,s';\hat{H}^{(l)}_{(z)}\right) = p\left\langle y_l \middle| s,s';\hat{H}^{(l)}_{(z)}\right\rangle \Pr\langle s|s'\rangle$$

$$(4)$$

$$p\left\langle y_l \middle| s,s';\hat{H}^{(l)}_{(z)}\right\rangle =$$

$$p\left\langle y_l \middle| \Psi\left(\overline{\vartheta}^{(b)}\right)\hat{H}^{(l)}_{(z)}\right\rangle \propto \exp\left(-\frac{1}{2\sigma^2}\left\|y_l - \hat{h}^{(l)}_0 z_l - \hat{I}_l\right\|^2\right)$$

où :

- $\hat{H}^{(l)}_{(z)}$ désigne l'estimée du canal à l'itération $\tau$ ;
- $z_l = \Psi(\overline{\vartheta}^{(b)})$ est le complexe associé au symbole entier M-aire $\overline{\vartheta}^{(b)}$ porté par la branche b ;
- $\hat{I}_l$ est le terme d'IES :

$$\hat{I}_l = \sum_{j=1}^{K_{ch}-1} \hat{h}^{(l)}_j \Psi\left(x_{l-j}\right) = \sum_{j-1}^{K_{ch}-1} \hat{h}^{(l)}_j z_{l-j}$$

- $\sigma^2$ représente la variance de bruit. Dans la relation (4) précitée, on indique que le terme $\hat{I}_l$ représentant le terme d'interférence entre symboles implique la séquence de symboles M-aires, séquence notée $\{x_{l-1}, x_{l-2}, \ldots, x_{l-Kch+1}\}$ intégralement contenue dans l'état ancêtre s' du treillis considéré.

En prenant en compte une parfaite décorrélation des bits de la séquence décodée après réentrelacement, la relation entre probabilités conditionnelles vérifiant la relation (5) :

$$\Pr\langle s|s'\rangle = \Pr\left(x_l = \overline{\vartheta}^{(b)}\right) = \prod_{i=1}^{\log_2 M} \Pr\left(x_{l,i} = \vartheta^{(b)}_i\right) \qquad (5)$$

la relation (1) précédente peut finalement être subdivisée en deux termes représentatifs de la séquence $S_l$, selon la relation (6) :

$$L^{(l)}_{soft}\left(x_{l,i}\right) = \ln \underbrace{\frac{\Pr\left(x_{l,i} = 1\right)}{\Pr\left(x_{l,i} = 0\right)}}_{\text{log a priori term}} \qquad (6)$$

(terme de logarithme de l'information a priori)

$$+ \ln \frac{\displaystyle\max_{b \in B, \vartheta^{(b)}=1} \alpha_{l-1}\!\left(s'; \hat{H}^{(l)}_{(z)}\right)\!\beta_l\!\left(s; \hat{H}^{(l)}_{(z)}\right)\!p\!\left\langle y_l \,\middle|\, \Psi\!\left(\overline{\vartheta}^{(b)}\right)\!\right\rangle ; \hat{H}^{(l)}_{(z)}\displaystyle\prod_{l=1, l\neq i}^{\log_2 M} \Pr\!\left(x_{l,l} = \vartheta^{(b)}_l\right)}{\underbrace{\displaystyle\max_{b \in B, \vartheta^{(b)}=0} \alpha_{l-1}\!\left(s'; \hat{H}^{(l)}_{(z)}\right)\!\beta\!\left(s; \hat{H}^{(l)}_{(z)}\right)\!p\!\left\langle y_l \,\middle|\, \Psi\!\left(\overline{\vartheta}^{(b)}\right)\!\right\rangle ; \hat{H}^{(l)}_{(z)}\displaystyle\prod_{l=1, l\neq 1}^{\log_2 M} \Pr\!\left(x_{l,l} = \vartheta^{(b)}_l\right)}_{\text{log extrinsic term}}}$$

(terme de logarithme de l'information extrinsèque)

Il visent :

$$S''_2 = \ln \frac{\Pr\!\left(x_{l,i} = 1\right)}{\Pr\!\left(x_{l,i} = 0\right)}$$

et :

$$S'_1 = L^{(l)}_{\text{soft}}\!\left(x_{l,i}\right) - S''_2$$

De manière plus spécifique, on indique que le module 1 égaliseur SISO MLSE peut être transposé dans le domaine logarithmique en appliquant les deux règles ci-après :

Règle 1

Toute grandeur exponentielle $e^{-Q}$ avec $Q \geq 0$ est transformée en $Q \leftarrow -\ln e^{-Q}$ ;

Règle 2

Toute expression de la forme $-\ln\!\left\{\displaystyle\max_\varsigma e^{-Q_\varsigma}\right\}$ est convertie en $\displaystyle\min_\varsigma Q_\varsigma$ et calculée récursivement ;

expressions dans lesquelles ln désigne le logarithme népérien, max et min représentent la valeur maximale, respectivement minimale des quantités correspondantes.

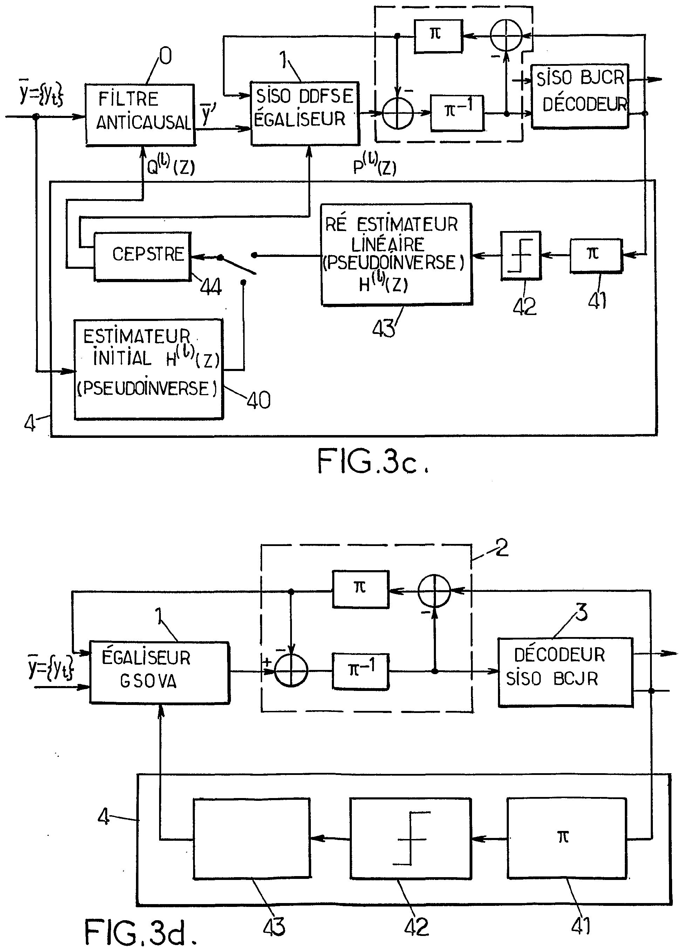

Un deuxième mode de réalisation particulier du système objet de la présente invention sera maintenant décrit en liaison avec la figure 3c dans le cas où le module égaliseur SISO 1 est constitué par un module égaliseur SISO DDFSE, le module décodeur SISO 3 est constitué par un module décodeur SISO BCJR à entrées/sorties souples, et le module 4 d'estimation itérative actualisée est réalisé au moyen d'un module de type *bootstrap*.

En référence à la figure 3c précitée et pour la mise en oeuvre considérée, le système objet de la présente invention est alors complété par un module de filtrage anticausal, portant la référence 0, recevant les paramètres calculés de filtre anticausal $\hat{Q}^{(l)}_{(z)}$, ce filtre anticausal recevant la séquence des symboles $\overline{y}$ des symboles reçus et délivrant une séquence de symboles reçus transformée, notée $\overline{y'}$, dans les conditions décrites précédemment dans la description. La séquence des symboles reçus transformée précitée est alors reçue par le module égaliseur SISO DDFSE 1 en lieu et place de la séquence de symboles $\overline{y}$.

En outre, en référence à la même figure 3c, le module égaliseur SISO DDFSE 1 reçoit les valeurs calculées du filtre à phase minimale $\hat{P}^{(l)}_{(z)}$, le filtre à phase minimale précité correspondant à un nouveau canal à minimum de phase à chaque itération sur lequel le module égaliseur 1 de type SISO DDFSE agit.

En ce qui concerne le module 4 d'estimation itérative actualisée des coefficients de la réponse impulsionnelle du canal, on indique que pour la mise en oeuvre d'un module de type *bootstrap,* celui-ci comporte, ainsi que représenté sur la figure 3c, un module 41 de réentrelacement de la séquence $S_2$ de sorties pondérées sur bits décodés issue du processus de décodage et délivrée par le module décodeur SISO BCJR 3, le processus de réentrelacement étant noté $\Pi$. Le module 41 de réentrelacement délivre une séquence de sorties pondérées sur bits décodés réentrelacés. En outre, le module 4 précité comporte un module 42 de décision dure recevant la séquence de sorties pondérées sur bits décodés et réentrelacés et délivrant une séquence de bits de symboles reçus reconstitués. On comprend en particulier que le module 42 peut être constitué par un comparateur à seuil permettant de délivrer une séquence de bits de symboles reçus reconstitués par comparaison à la valeur de seuil précitée.

Enfin, le module 4 d'estimation itérative actualisée comporte également un module 43 de pseudo-inversion linéaire sur la totalité des symboles reçus reconstitués, permettant de délivrer une estimation actualisée des coefficients de la réponse impulsionnelle du canal de transmission $\hat{H}_{(z)}^{(l+1)}$ .

Le module 4 d'estimation itérative actualisée tel que représenté en figure 3c comporte également un estimateur initial 40 recevant la séquence de symboles reçus $\overline{y}$ et permettant de délivrer la valeur estimée de la réponse impulsionnelle du canal préalablement à toute itération, c'est-à-dire les valeurs $\hat{H}_{(z)}^{(l=0)}$ . Un module de calcul 44 reçoit, d'une part, les informations délivrées par le module 40 et par le module 43, estimateur initial, respectivement réestimateur linéaire, pour délivrer les valeurs calculées du filtre anticausal $\hat{Q}_{(z)}^{(l)}$ et du filtre à phase minimale $\hat{P}_{(z)}^{(l)}$ .

D'une manière non limitative, on indique que le module 44 de calcul précité peut avantageusement consister en un module de calcul par la méthode du CEPSTRE.

Pour une description plus détaillée d'un tel module de calcul et de la méthode précitée, on pourra utilement se reporter à l'article intitulé "Filtre correcteur de phase pour égaliseurs sous-optimaux", Annales de Télécommunications, n°9-10, 1992, publié par A VAUTIER, J.C. DANY, C. MOUROT.

Le fonctionnement du dispositif représenté en figure 3c est alors le suivant. L'ensemble constitué par le module égaliseur 1 de type SISO DDFSE et le module décodeur de type SISO BCJR 3 constituant un turbodétecteur réalise chaque itération conditionnellement aux valeurs du filtre à phase minimale $\hat{P}_{(z)}^{(l)}$ .

Pour chacune des itérations précitées, les étapes 1 et 2 successives sont réalisées de la manière ci-après :

Etape 1

A partir des sorties pondérées produites par le module égaliseur 1, une information extrinsèque est calculée au niveau binaire pour chacun des m paquets de symboles concaténés, cette information extrinsèque correspondant à celle délivrée par le premier module soustracteur 20 et désignée par la séquence S'$_1$.

Etape 2

Après désentrelacement par le module de désentrelacement 21, l'information a priori correspondante est utilisée comme information de vraisemblance sur les bits codés pour le module décodeur 3. Ce denier évalue les fiabilités sur chaque bit codé selon la séquence $S_2$ précédemment décrite dans la description, le deuxième module soustracteur 22 extraie une information extrinsèque, laquelle, après réentrelacement par l'intermédiaire du module 23, est utilisée par le module égaliseur 1 comme information a priori sur les bits composant les symboles reçus en vue d'une nouvelle itération.

A la fin de chaque itération de rang l réalisée grâce à l'échange d'information a priori entre le module égaliseur 1 et le module décodeur 3, le module 4 d'estimation itérative actualisée réalise, à partir de la séquence $S_2$, une décision dure sur chaque bit codé à partir des valeurs de fiabilité représentées par la séquence $S_2$ précitée. Après réentrelacement par l'intermédiaire du module 41, le flux de bits codés reconstitués et estimés est utilisé pour recomposer chacun des m paquets de symboles concaténés. Le processus *bootstrap* est alors appliqué paquet par paquet. Le module 43 de réestimation linéaire permet, par pseudo-inversion linéaire appliquée sur la totalité des symboles composants de produire une nouvelle estimée, notée $\hat{H}_{m(z)}^{(l+1)}$ des coefficients du canal de transmission pour chaque paquet m considéré. Les paramètres des filtres, anticausal et à phase minimale, peuvent alors être dérivés pour le paquet considéré de rang m pour l'itération à venir de rang 1+1.

L'utilisation des bits produits en sortie du module décodeur 3, c'est-à-dire la séquence $S_2$, permet de bénéficier de la diversité temporelle introduite par l'entrelacement engendré à l'émission. Par ailleurs, pour chaque itération, les symboles réévalués après réentrelacement et utilisés pour la réestimation par le processus *bootstrap* sont bien plus fiables que ceux délivrés en sortie du module égaliseur 1, car ces derniers bénéficient de la puissance correctrice apportée par le décodage.

Différentes indications seront maintenant données en ce qui concerne un justificatif théorique du mode opératoire du module égaliseur 1 SISO DDFSE et du processus dit *bootstrap* consistant en une réestimation des 155 symboles de chacun des m paquets concénatés de symboles reçus à partir des fiabilités sur les bits codés en sortie du module décodeur 3.

Pour une modulation M-aire et un canal de transmission à $K_{ch}$ coefficients, la complexité du treillis de décodage en nombre d'états s'exprime par la relation :

$$W_{mlse} = M^{K_{ch}-1}.$$

La plupart des canaux de transmission de test utilisés dans le cadre de la normalisation ne possèdent pas plus de $K_{ch} = 6$ coefficients.

Une approche d'égalisation MLSE, optimale séquence par séquence, nécessiterait la mise en oeuvre d'un treillis comportant 32 768 états dans le cas d'une modulation MDP8 où M = 8. Cette modulation est utilisé dans le cas du GSM évolué, EDGE. Un tel treillis ne peut être mis en oeuvre d'un point de vue pratique.

En conséquence, il est donc nécessaire de mettre en oeuvre un processus d'égalisation sous-optimal.

Parmi les égaliseurs et les processus d'égalisation basés sur des treillis simplifiés, l'égaliseur de type DFSE apparaît comme un bon compromis offert entre performance et complexité. En effet, les états du treillis sur lequel l'égaliseur DFSE opère sont calculés en ne prenant en compte que les premiers coefficients de la réponse impulsionnelle du canal et la complexité d'états du treillis requis se réduit à la valeur :

$$W_{dfse} = M^{L_{ch}-1}$$

où $L_{ch}$ désigne les premiers coefficients de la réponse impulsionnelle du canal de transmission pris en compte.

L'approche d'égalisation DFSE consiste en fait à récupérer l'influence des coefficients résiduels dans le calcul de la métrique par un traitement sur les chemins survivants. Dans le cas où une grande partie de l'interférence entre symboles est contenue dans les $K_{ch}-L_{ch}$ derniers coefficients de la réponse impulsionnelle du canal, la dégradation en performance par rapport à un égaliseur ou un processus d'égalisation MLSE optimal est significative.

Pour garantir une performance moyenne proche de la performance optimale, on réalise alors un préfiltrage correcteur en amont du module égaliseur 1, ce préfiltrage ayant pour but de convertir la réponse impulsionnelle du canal discret équivalent en une réponse correspondant à celle d'un filtre à phase minimale où l'énergie du signal est concentrée dans les $L_{ch}$ premiers coefficients. Un tel préfiltrage accroît considérablement la pertinence des métriques de transition évaluées par le module égaliseur 1.

La différence essentielle entre le processus d'égalisation DFSE et le processus d'égalisation MLSE tient dans le calcul de la métrique de transition, toutes les autres équations et relations restant toutefois valables par ailleurs.

Ainsi, la valeur des probabilités conditionnelles s'écrit selon la relation (7) :

$$p\left\langle y_l \middle| S'; \hat{P}_{(z)}^{(l)} \right\rangle = p\left\langle y_l \middle| \Psi\left(\overline{\vartheta}^{(b)}\right) \hat{P}_{(z)}^{(l)} \right\rangle \propto \exp\left(-\frac{1}{2\sigma^2}\left\| y_l - \hat{p}_0^{(l)} z_l - \hat{I}_l^{(1)} - \hat{I}_l^{(2)} \right\|\right)^2 \quad (7)$$

où :

- $\hat{P}_{(z)}^{(l)}$ désigne l'estimée du filtre à phase minimale réévalué par la méthode du CEPSTRE à l'itération l ;

- $\hat{p}_j^{(l)}$ représente le $j^{ème}$ coefficient du filtre à phase minimale ;

- $z_l = \Psi(\overline{\vartheta}^{(b)})$ est le nombre complexe associé au symbole entier M-aire $\overline{\vartheta}^{(b)}$ porté par la branche b ;

- $\hat{I}_l^{(1)}$ est la premier partie du terme d'IES :

$$\hat{I}_l^{(1)} = \sum_{j=1}^{L_{ch}-1} \hat{p}_j^{(l)}\Psi(x_{l-j}) = \sum_{j=1}^{L_{ch}-1} \hat{p}_j^{(l)}z_{l-j}$$

qui implique la séquence de symboles M-aires $\{x_{l-1}, x_{l-2}, ..., x_{l-Lch+1}\}$, intégralement contenue dans l'état ancêtre s' du sous-treillis ;

- $\hat{I}_l^{(2)}$ est la seconde partie du terme d'IES :

$$\hat{I}_l^{(2)} = \sum_{j=1}^{L_{ch}-1} \hat{p}_j^{(l)}\Psi(x_{l-j}) = \sum_{j=1}^{L_{ch}-1} \hat{p}_j^{(l)}z_{l-j}$$

En ce qui concerne $\hat{I}_l^{(2)}$, seconde partie du terme d'interférence entre symboles, on indique que celui-ci implique la séquence de symboles M-aires $\{x_{l-Lch}, x_{l-Lch-1}, ..., x_{l-Kch+1}\}$ obtenue en remontant le chemin survivant l(S') partant de l'état ancêtre s' du sous-treillis et stocké dans une matrice de remontée (trace *back matrix).*

En ce qui concerne la mise en oeuvre du processus de réestimation de type *bootstrap,* on indique que ce dernier consiste en fait en une réestimation des 155 symboles de chacun des m paquets de symboles concaténés à partir des fiabilités sur bits codés en sortie du module décodeur 3, c'est-à-dire à partir de la séquence $S_2$.

Le flux des bits codés ainsi réestimés, suite aux opérations réalisées par les modules 41 et 42, est réentrelacé puis resegmenté en m paquets de 114 x bits utiles. Dans chacun des paquets considérés, chaque triplet de bits permet de recomposer un symbole MDP8 utile. Le reste des symboles, symboles de queue et symboles de garde, est a priori connu.

A partir de chacun des paquets réestimés, on forme un système matriciel complexe vérifiant la relation (8) :

$$\overline{y} = A^{(l)}\overline{h}^{(l+1)} + \overline{b} \tag{8}$$

relation dans laquelle A définit une matrice de TOEPLITZ définie par la relation (9) :

$$a_{i,j}^{(l)} = \hat{z}_{(i-j+Kch)\bmod 155}^{(l)} \tag{9}$$

Le processus de pseudo-inversion permet alors de fournir une solution minimisant la probabilité d'erreur, ou la distance euclidienne, selon la relation 10 :

$$\overline{h}^{(l+1)} = \left(A^{\perp}A\right)^{-1} A^{\perp}\overline{y} \tag{10}$$

Le vecteur $\overline{h}(^{l+1})$ de coefficient du canal est alors utilisé comme estimée de la valeur des coefficients du canal $\hat{H}_{(z)}^{(l+1)}$.

En ce qui concerne le processus de décodage et la mise en oeuvre du décodeur SISO BJCR 3, on pourra se reporter, pour une description plus détaillées, à l'article intitulé "Maximum Likelihood from incomplete Data via the Idem Algorithms", publié A.P DEMSTER, N.M. LAIRD, D.B. RUBIN, J. ROY. Stat. Soc., Sor. 39 pp. 1-38, 1977.

Enfin, un troisième mode de réalisation spécifique du système objet de la présente invention, peut être mis en oeuvre, ainsi que décrit en relation avec la figure 3d, dans le cas où le module égaliseur 1 est constitué par un module égaliseur de type GSOVA et que le module de décodage 3 est constitué par un module de décodage BCJR à entrées/sorties souples.

Dans ces conditions, de même que dans le cas de la figure 3c, le module 4 peut être réalisé par un module de réestimation itérative des coefficients de la réponse impulsionnelle du canal de transmission de type bootstrap.

Différents essais par simulation de mise en oeuvre du procédé et du système objets de la présente invention ont été réalisés.

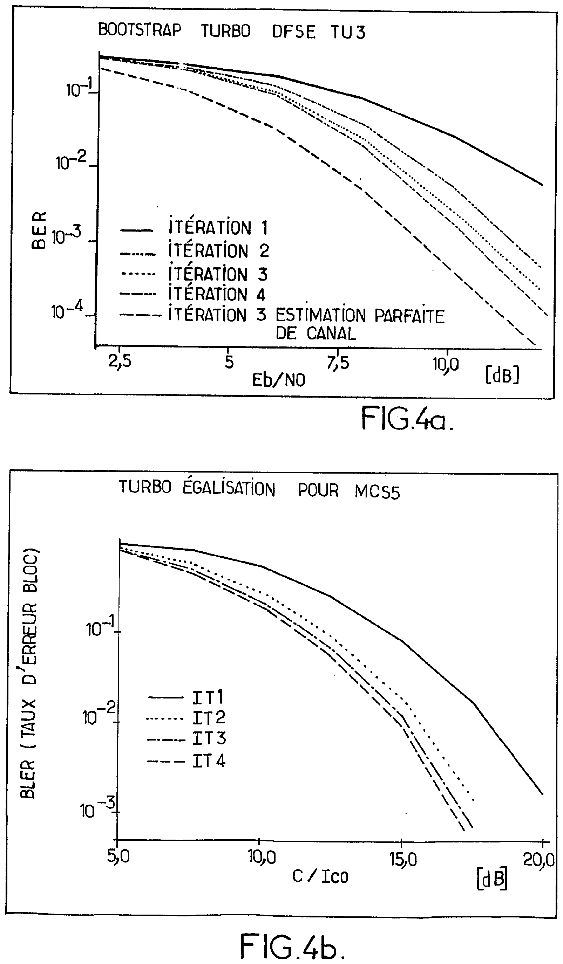

Ainsi, dans le cadre de la figure 4a, le filtre d'émission pris en compte était celui de la GMSK linéarisée. A la réception, le facteur de *roll-off* du filtrage en racine de Nyquist était fixé à 0,5. Le code convolutif mis en oeuvre à l'émission pour assurer l'introduction de valeurs redondantes dans les bits du symbole transmis était un code récursif systématique de longueur de contrainte 5 admettant un diagramme du treillis à 16 états. Les polynômes générateurs du code convolutif étaient de la forme donnée par la relation (11) :

$$g_1(D) = 1$$
$$g_2(D) = \frac{1 + D + D^2 + D^4}{1 + D + D^4} \qquad (11)$$

Ces conditions de codage impliquent une disante libre de 7. Le processus d'entrelacement $\Pi$ impliquait m = 8 paquets de symboles de type GSM évolué, EDGE, soit une profondeur N = 3 x 114 x 8. La modulation MDP8 choisie contenait la modulation MDP2 afin de pouvoir utiliser les propriétés d'autocorrélation de la séquence CAZAC. Dans ces conditions, les algorithmes de synchronisation et d'estimation de canal pour la première itération sont les mêmes que ceux utilisés dans le système GSM.

Le débit était $R_s$ = 270,8 kbauds/s et le canal radiomobile testé était le *Typical Urban* fourni par la norme GSM 05.05. ce canal de transmission est un canal sélectif en fréquence modélisé sous la forme de trajets multiples de RAYLEIGH et dont les coefficients de la réponse impulsionnelle suivent une distribution Gaussienne complexe dont la variation est donnée par le profil Doppler normalisé.

Dans le cas où le canal peut être supposé constant sur la durée d'un paquet de symboles, alors, le profil Doppler n'influe aucunement sur les performances de l'ensemble. Tel était le cas dans le cadre de la simulation à la vitesse choisie de 3 km/h. De plus, dans le cadre de la simulation effectuée, le canal de transmission était considéré indépendant d'un paquet au suivant, ce qui revient à prendre comme hypothèse un saut de fréquence idéal.

La figure 4a représente un diagramme exprimant en ordonnées la valeur du taux d'erreur binaire et en abscisses, le rapport signal à bruit exprimé en décibels.

A l'observation de la figure précitée, on peut constater une amélioration significative des performances de mise en oeuvre du procédé et du système objets de la présente invention, en termes de taux d'erreur de bits au fil des itérations. En particulier, aucun gain en performance n'est observé au-delà de quatre itérations, alors que la première itération correspond sensiblement à celle du récepteur standard.

Le procédé et le système objets de la présente invention permettent ainsi de récupérer une partie importante, soit 1,7 dB, de la dégradation de 2,7 dB introduite par l'estimation bruitée des coefficients du canal de transmission. Cette propriété valide l'intérêt de la réestimation mise en oeuvre en particulier par le processus de réestimation *bootstrap.* La courbe de performance à l'itération d'ordre 4 se situe à environ 1 dB de la courbe d'estimation parfaite effectuée sous l'hypothèse de l'itération 3.

Une évaluation du gain en décibels apportée par le procédé et le système objets de la présente invention vis-à-vis de séquences de symboles GSM évoluées EDGE vis-à-vis des récepteurs standard est donnée dans le tableau ci-après :

| Taux d'erreur binaire (BER) | Gain en dB/récepteur EDGE standard |
|---|---|
| le-1 = $10^{-1}$ | 1,8 |
| le-2 = $10^{-2}$ | 2,8 |
| le-3 = $10^{-3}$ | 3,3 |
| le-4 = $10^{-4}$ | 3,9 |
| le-5 = $10^{-5}$ | 4,1 |

Dans le cas de la figure 4b, une modulation MCS5 de la norme EDGE a été estimée en *Typical Urban,* saut de fréquence idéal :

- Taux d'erreur bloc : $10^{-2}$
- Gain en dB/récepteur EDGE codage MCS5 : 3 dB.

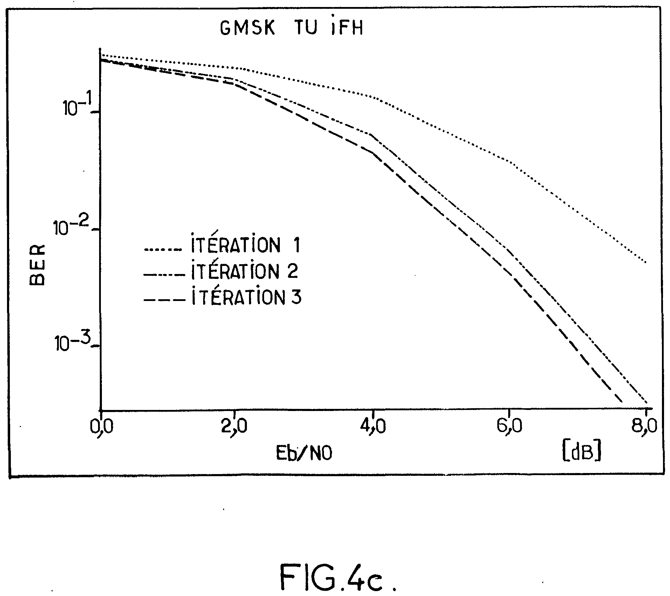

Dans le cas de la figure 4c, une modulation GMSK est utilisée, le filtre d'émission restant le même, le filtre de réception utilisé était du type *Butterworth* avec une occupation spectrale BT = 0,6. L'entrelacement était choisi sur 36 cellules, soit 36 x 114 bits codés, le code de convolution et le canal de transmission de type *Typical Urban* étant identiques à ceux de la figure 4a. Les conditions de saut de fréquence idéal sont également prises en compte. L'observation de la figure 4b montre l'obtention d'un gain sensiblement égal à 2 dB pour un taux d'erreur binaire de $10^{-2}$.

Enfin, l'invention concerne tout produit logiciel permettant la mise en oeuvre du procédé et la réalisation du système objets de l'invention conformément aux organigrammes représentés aux dessins figures 2a à 2f et 3a à 3d de la présente description.

## Revendications

1. Procédé de détection et de décodage itératif à complexité réduite de symboles codés et entrelacés transmis sur un canal de transmission, ces symboles étant transmis à partir d'une séquence de symboles binaires, chaque séquence de symboles reçus comportant au moins, outre les symboles de données, de garde et de queue, des symboles d'apprentissage spécifiques, **caractérisé en ce qu'**il consiste, à partir d'un égaliseur sous-optimal à entrées et sorties pondérées, opérant sur un treillis de canal réduit en nombre d'états :

   - préalablement à toute itération,

     - à effectuer une estimation linéaire initiale des coefficients de la réponse impulsionnelle du canal de transmission $\hat{H}^{(l)}_{(z)}$ à partir des symboles d'apprentissage spécifiques transmis ;

   - par itération, pour chaque itération courante :

     - à effectuer une égalisation sous-optimale opérant sur un treillis de canal réduit en nombre d'états à partir d'une information a priori sur les bits de symbole issue du décodage de l'itération antérieure ;
     - à effectuer un décodage à entrées et sorties pondérées à partir d'une information a priori sur les bits codés en provenance de l'opération d'égalisation sous-optimale de l'itération courante,
     - à effectuer une réestimation itérative actualisée des coefficients de la réponse impulsionnelle du canal de transmission, en fonction des informations délivrées par le processus itératif d'égalisation et de décodage,
     - à répéter les étapes réalisées par itération à l'itération suivante.

2. Procédé selon la revendication 1, **caractérisé en ce que** le processus de réestimation est un processus itératif de type EM opérant sur le même treillis de canal que celui sur lequel opère l'égaliseur sous-optimal à partir de l'information extrinsèque sur les bits codés en sortie du décodeur.

3. Procédé selon la revendication 1, **caractérisé en ce que** le processus de réestimation est un processus linéaire de type Bootstrap satisfaisant le critère MMSE utilisant une version durcie de l'information a posteriori sur les bits codés en sortie du décodeur.

4. Procédé selon l'une des revendications 1 à 3, **caractérisé en ce que** le processus d'égalisation sous-optimale consiste en la combinaison d'un préfiltrage, rendant le canal à phase minimale, c'est-à-dire maximisant l'énergie sur les premiers coefficients du canal discret équivalent, et d'un processus DDFSE à entrées et sorties souples.

5. Procédé selon la revendication 4, **caractérisé en ce que** ledit processus DDFSE comporte une procédure de calcul des sorties souples basée sur une récursion aller-retour, dans laquelle le calcul de la métrique de transition est un calcul par survivants sur la seule récursion aller.

6. Procédé selon l'une des revendications 1, 2 ou 3, **caractérisé en ce que** le processus d'égalisation sous-optimale est basé sur un traitement par survivants généralisé, consistant à conserver un nombre déterminé de survivants par noeud du treillis de canal réduit en nombre d'états, dans lequel le calcul des sorties souples est réalisé par une récursion aller simple.

7. Procédé selon la revendication 1, 2 ou 4, **caractérisé en ce que** ledit processus d'égalisation consistant en un processus d'égalisation de type DDFSE, dans lequel un seul survivant par noeud est retenu, celui-ci consiste en outre :

■ préalablement à toute itération,

- à calculer, à partir de ladite estimation linéaire initiale des coefficients de la réponse impulsionnelle $\hat{H}_{(z)}^{(l)}$ du canal de transmission, un filtre à phase minimale $\hat{P}_{(z)}^{(l)}$, respectivement un filtre anticausal $\hat{Q}_{(z)}^{(l)}$, avec $\hat{H}_{(z)}^{(l)} * \hat{Q}_{(z)}^{(l)} = \hat{P}_{(z)}^{(l)}$, le filtre $\hat{P}_{(z)}^{(l)}$ étant défini comme un canal de transmission à phase minimale initial, puis

■ par itération,

- à soumettre ladite séquence de symboles reçus audit processus d'égalisation, conditionnellement aux valeurs du filtre à phase minimale $\hat{P}_{(z)}^{(l)}$ défini comme un canal de transmission à phase minimale successif pour l'itération courante, et, à partir de ladite estimation linéaire actualisée $\hat{H}_{m(z)}^{(l+1)}$ pour l'itération suivante ;

- à effectuer une actualisation, pour l'itération suivante, du filtre $\hat{P}_{(z)}^{(l+1)}$ à phase minimale défini comme un canal de transmission à phase minimale successif, et du filtre anticausal $\hat{Q}_{(z)}^{(l+1)}$ associé à ce dernier.

8. Procédé selon l'une des revendications précédentes, **caractérisé en ce que** ladite étape consistant à effectuer une estimation actualisée des coefficients de la réponse impulsionnelle $\hat{H}_{(z)}^{(l+1)}$ pour l'itération suivante consiste :

- à soumettre ladite séquence de sorties pondérées sur bits décodés à un entrelacement ;
- à soumettre le flux de la séquence de sorties pondérées ré-entrelacée à une décision dure pour reconstituer les symboles reçus ;
- à soumettre les symboles reçus reconstitués à un processus de pseudo-inversion linéaire sur la totalité des symboles reçus reconstitués.

9. Système de détection et de décodage itératif à complexité réduite de symboles codés et entrelacés sur un canal de transmission, ces symboles étant transmis à partir d'une séquence de symboles binaires, chaque séquence de symboles reçus comportant au moins, outre les symboles de données, de garde et de queue, des symboles d'apprentissage spécifiques, **caractérisé en ce qu'**il comporte au moins :

- des moyens (1) d'égalisation sous-optimale à entrées et sorties souples recevant lesdits symboles reçus et délivrant une séquence de sorties pondérées sur bits de symboles égalisés ;
- des moyens (2) de calcul et d'échange itératif d'information a priori, d'une part, sur les bits symboles, pour le processus d'égalisation sous-optimale, en provenance des bits symboles décodés, et, d'autre part, sur les bits codés, pour le processus de décodage, en provenance des bits de symboles égalisés par égalisation sous-optimale ;
- des moyens (3) de décodage à entrées et sorties souples recevant ladite information a priori sur les bits codés et délivrant une séquence de sorties pondérées sur bits décodés issue du processus de décodage ;
- des moyens (4) d'estimation itérative actualisée des coefficients de la réponse impulsionnelle du canal de transmission, en fonction des informations délivrées par le processus itératif d'égalisation sous-optimale et de décodage.

10. Système selon la revendication 9, **caractérisé en ce que** lesdits moyens (4) d'estimation itérative actualisée comportent :

- des moyens (40) d'estimation initiale des coefficients de la réponse impulsionnelle du canal de transmission ;
- des moyens d'estimation itérative actualisée de type EM des coefficients de la réponse impulsionnelle du canal de transmission.

11. Système selon les revendications 9 et 10, **caractérisé en ce que** :

- lesdits moyens (1) d'égalisation sous-optimale sont constitués par des moyens d'égalisation MLSE à entrées/sorties souples ;
- lesdits moyens de décodage (3) sont constitués par des moyens de décodage BCJR à entrées/sorties souples.

12. Système selon les revendications 9 et 10, **caractérisé en ce que** :

- lesdits moyens (1) d'égalisation sous-optimale sont constitués par des moyens d'égalisation DDFSE à entrées/sorties souples ;
- lesdits moyens de décodage (3) sont constitués par des moyens de décodage BCJR à entrées/sorties souples.

13. Système selon les revendications 9 et 10, **caractérisé en ce que** :

- lesdits moyens (1) d'égalisation sous-optimale sont constitués par des moyens d'égalisation GSOVA ;
- lesdits moyens de décodage (3) sont constitués par des moyens de décodage BCJR à sorties souples.

14. Système selon la revendication 9 et l'une des revendications 12 ou 13, **caractérisé en ce que** lesdits moyens (4) d'estimation itérative actualisée comportent :

- des moyens (41) de réentrelacement de la séquence ($S_2$) de sorties pondérées sur bits décodés issue du processus de décodage, délivrant une séquence de sorties pondérées sur bits décodés réentrelacés ;
- des moyens (42) de décision dure recevant la séquence de sorties pondérées sur bits décodés réentrelacée et délivrant une séquence de bits de symboles reçus reconstitués ;
- des moyens (43) de pseudo-inversion linéaire sur la totalité des symboles reçus reconstitués, permettant de délivrer une estimation actualisée des coefficients de la réponse impulsionnelle du canal de transmission $\hat{H}^{1+1}_{(z)}$ .

## Patentansprüche

1. Verfahren zur Erkennung und iterativen Decodierung mit reduzierter Komplexität von codierten und verschachtelten Symbolen, die auf einem Übertragungskanal übertragen werden, wobei diese Symbole von einer Sequenz von binären Symbolen ausgehend übertragen werden, wobei jede Sequenz von empfangenen Symbolen außer den Daten-, Kopf- und Endsymbolen mindestens spezifische Lernsymbole umfasst, **dadurch gekennzeichnet, dass** es darin besteht, ausgehend von einem suboptimalen Entzerrer mit gewichteten Eingängen und Ausgängen, der auf ein Kanalnetz mit einer verringerten Anzahl von Zuständen einwirkt:

■ vor jeder Iteration,

- eine lineare anfängliche Schätzung der Koeffizienten der Impulsantwort des Übertragungskanals $\hat{H}^{(1)}_{(z)}$ aus den übertragenen spezifischen Lernsymbolen durchzuführen;

■ durch Iteration für jede laufende Iteration:

- eine suboptimale Entzerrung durchzuführen, die auf ein Kanalnetz mit einer verringerten Anzahl von Zuständen ausgehend von einer Information a priori auf den Symbolbits, die von der Decodierung der vorherigen Iteration stammt, einwirkt;
- eine Decodierung mit gewichteten Eingängen und Ausgängen aus einer Information a priori auf den codierten Bits, die von dem suboptimalen Entzerrungsvorgang der laufenden Iteration stammen, durchzuführen,
- eine aktualisierte iterative Neuschätzung der Koeffizienten der Impulsantwort des Übertragungskanals in Abhängigkeit von den Informationen durchzuführen, die von dem iterativen Entzerrungs- und Decodierungsvorgang geliefert werden,
- die durch Iteration ausgeführten Schritte bei der folgenden Iteration zu wiederholen.

**2.** Verfahren nach Anspruch 1, **dadurch gekennzeichnet, dass** das Neuschätzungsverfahren ein iteratives Verfahren des Typs EM ist, das auf dasselbe Kanalnetz wie jenes einwirkt, auf das der suboptimale Entzerrer ausgehend von der extrinsischen Information auf den codierten Bits am Ausgang des Decoders einwirkt.

**3.** Verfahren nach Anspruch 1, **dadurch gekennzeichnet, dass** das Neuschätzungsverfahren ein lineares Verfahren des Typs Bootstrap ist, das das Kriterium MMSE erfüllt, das eine härtere Version der Information a posteriori auf den codierten Bits am Ausgang des Decoders verwendet.

**4.** Verfahren nach einem der Ansprüche 1 bis 3, **dadurch gekennzeichnet, dass** das suboptimale Entzerrungsverfahren in der Kombination einer Vorfilterung, die den Kanal auf minimale Phase setzt, d.h. die Energie auf den ersten Koeffizienten des äquivalenten diskreten Kanals maximiert, und eines DDFSE-Verfahrens mit flexiblen Eingängen und Ausgängen besteht.

**5.** Verfahren nach Anspruch 4, **dadurch gekennzeichnet, dass** das DDFSE-Verfahren ein Verfahren zur Berechnung der flexiblen Ausgänge basierend auf einer Hin-Retour-Rekursion umfasst, bei der die Berechnung der Übergangsmetrik eine Survivor-Berechnung nur auf der Hin-Rekursion ist.

**6.** Verfahren nach einem der Ansprüche 1, 2 oder 3, **dadurch gekennzeichnet, dass** das suboptimale Entzerrungsverfahren auf einer generalisierten Survivor-Bearbeitung basiert, die darin besteht, eine bestimmte Anzahl von Survivors pro Knoten des Kanalnetzes mit verringerter Anzahl von Zuständen zu bewahren, wobei die Berechnung der flexiblen Ausgänge durch eine einfache Hin-Rekursion erfolgt.

**7.** Verfahren nach Anspruch 1, 2 oder 4, **dadurch gekennzeichnet, dass** das Entzerrungsverfahren in einem Entzerrungsverfahren des Typs DDFSE besteht, bei dem ein einziger Survivor pro Knoten festgehalten wird, dieses ferner darin besteht:

■ vor jeder Iteration

- ausgehend von der linearen anfänglichen Schätzung der Koeffizienten der Impulsantwort $\hat{H}^{(1)}_{(z)}$ des Übertragungskanals einen Filter mit minimaler Phase $\hat{P}^{(1)}_{(z)}$ bzw. einen antikausalen Filter $\hat{Q}^{(1)}_{(z)}$ zu berechnen, wobei $\hat{H}^{(1)}_{(z)} * \hat{Q}^{(1)}_{(z)} = \hat{P}^{(1)}_{(z)}$, wobei der Filter $\hat{P}^{(1)}_{(z)}$ als ein anfänglicher Übertragungskanal mit minimaler Phase definiert ist, dann

■ durch Iteration

- die Sequenz von empfangenen Symbolen dem Entzerrungsverfahren zu unterziehen, bedingt den Werten des Filters mit minimaler Phase $\hat{P}^{(1)}_{(z)}$, der als ein folgender Übertragungskanal mit minimaler Phase für die laufende Iteration definiert ist, und ausgehend von der aktualisierten linearen Schätzung $\hat{H}^{(1+1)}_{m(z)}$ für die folgende Iteration;

- für die folgende Iteration eine Aktualisierung des Filters $\hat{P}^{(1+1)}_{(z)}$ mit minimaler Phase, der als ein folgender Übertragungskanal mit minimaler Phase definiert ist, und des antikausalen Filters $\hat{Q}^{(1+1)}_{(z)}$, der diesem letztgenannten zugeordnet ist, durchzuführen.

**8.** Verfahren nach einem der vorhergehenden Ansprüche, **dadurch gekennzeichnet, dass** der Schritt, der darin besteht, eine aktualisierte Schätzung der Koeffizienten der Impulsantwort $\hat{H}^{(1+1)}_{(z)}$ für die folgende Iteration durchzuführen, darin besteht:

- die Sequenz von gewichteten Ausgängen auf decodierten Bits einer Verschachtelung zu unterziehen;
- den Strom der wieder verschachtelten Sequenz von gewichteten Ausgängen einer harten Entscheidung zu unterziehen, um die empfangenen Symbole zu rekonstruieren;
- die rekonstruierten empfangenen Symbole einem Verfahren einer linearen Pseudo-Inversion auf der Gesamtheit der rekonstruierten empfangenen Symbole zu unterziehen.

**9.** System zur Erkennung und iterativen Decodierung mit reduzierter Komplexität von codierten und verschachtelten Symbolen auf einem Übertragungskanal, wobei diese Symbole von einer Sequenz von binären Symbolen ausgehend übertragen werden, wobei jede Sequenz von empfangenen Symbolen außer den Daten-, Kopf- und Endsymbolen mindestens spezifische Lernsymbole umfasst, **dadurch gekennzeichnet, dass** es mindestens umfasst:

- Mittel (1) zur suboptimalen Entzerrung mit flexiblen Eingängen und Ausgängen, die die empfangenen Symbole empfangen und eine Sequenz von gewichteten Ausgängen auf Bits von entzerrten Symbolen liefern;
- Mittel (2) zur Berechnung und zum iterativen Austausch von Information a priori einerseits auf den Symbolbits für das suboptimale Entzerrungsverfahren, die von den decodierten Symbolbits stammt, und andererseits auf den codierten Bits für das Decodierungsverfahren, die von den durch suboptimale Entzerrung entzerrten Symbolbits stammt;
- Decodierungsmittel (3) mit flexiblen Eingängen und Ausgängen, die die Information a priori auf den codierten Bits empfangen und eine Sequenz von gewichteten Ausgängen auf decodierten Bits liefern, die vom Decodierungsverfahren stammt;
- Mittel (4) zur aktualisierten iterativen Schätzung der Koeffizienten der Impulsantwort des Übertragungskanals in Abhängigkeit von den Informationen, die von dem iterativen Verfahren der suboptimalen Entzerrung und Decodierung geliefert werden.

**10.** System nach Anspruch 9, **dadurch gekennzeichnet, dass** die Mittel (4) zur aktualisierten iterativen Schätzung umfassen:

- Mittel (40) zur anfänglichen Schätzung der Koeffizienten der Impulsantwort des Übertragungskanals;
- Mittel zur aktualisierten iterativen Schätzung des Typs EM der Koeffizienten der Impulsantwort des Übertragungskanals.

**11.** System nach den Ansprüchen 9 und 10, **dadurch gekennzeichnet, dass**:

- die Mittel (1) zur suboptimalen Entzerrung von Entzerrungsmitteln MLSE mit flexiblen Eingängen/Ausgängen gebildet sind;
- die Decodierungsmittel (3) von Decodierungsmitteln BCJR mit flexiblen Eingängen/Ausgängen gebildet sind.

**12.** System nach den Ansprüchen 9 und 10, **dadurch gekennzeichnet, dass**:

- die Mittel (1) zur suboptimalen Entzerrung von Entzerrungsmitteln DDFSE mit flexiblen Eingängen/Ausgängen gebildet sind;
- die Decodierungsmittel (3) von Decodierungsmitteln BCJR mit flexiblen Eingängen/Ausgängen gebildet sind.

**13.** System nach den Ansprüchen 9 und 10, **dadurch gekennzeichnet, dass**:

- die Mittel (1) zur suboptimalen Entzerrung von Entzerrungsmitteln GSOVA gebildet sind;
- die Decodierungsmittel (3) von Decodierungsmitteln BCJR mit flexiblen Ausgängen gebildet sind.

**14.** System nach Anspruch 9 und einem der Ansprüche 12 oder 13, **dadurch gekennzeichnet, dass** die Mittel (4) zur aktualisierten iterativen Schätzung umfassen:

- Mittel (41) zur Wiederverschachtelung der Sequenz ($S_2$) von gewichteten Ausgängen auf decodierten Bits, die von dem Decodierungsverfahren stammt, die eine Sequenz von gewichteten Ausgängen auf wiederverschachtelten decodierten Bits liefern;
- Mittel (42) zur harten Entscheidung, die die wiederverschachtelte Sequenz von gewichteten Ausgängen auf decodierten Bits empfangen und eine Sequenz von rekonstruierten empfangenen Symbolbits liefern;
- Mittel (43) zur linearen Pseudo-Inversion auf der Gesamtheit der rekonstruierten empfangenen Symbole, die es ermöglichen, eine aktualisierte Schätzung der Koeffizienten der Impulsantwort des Übertragungskanals $\hat{H}_{(z)}^{(l+1)}$ zu liefern.

**Claims**

1. Method for detection and iterative decoding with reduced complexity of coded and interleaved symbols transmitted over a transmission channel, these symbols being transmitted from a sequence of binary symbols, each sequence of symbols received comprising at least, in addition to the data, guard and tail symbols, specific learning symbols, **characterized in that** it consists, from a suboptimal equalizer with weighted inputs and outputs, working on a channel lattice reduced in terms of number of states:

   • prior to any iteration,

      - in performing an initial linear estimation of the coefficients of the impulse response of the transmission channel $\hat{H}_{(z)}^{(1)}$ from the specific learning symbols transmitted;

   • by iteration, for each current iteration:

      - in performing a suboptimal equalization working on a channel lattice reduced in terms of number of states from an a priori item of information on the symbol bits deriving from the decoding of the prior iteration;
      - in performing a decoding with weighted inputs and outputs from an a priori item of information on the coded bits originating from the suboptimal equalization operation of the current iteration,
      - in performing an updated iterative re-estimation of the coefficients of the impulse response of the transmission channel, according to the items of information delivered by the iterative equalization and decoding process,
      - in repeating the steps performed by iteration on the next iteration.

2. Method according to Claim 1, **characterized in that** the re-estimation process is an iterative process of EM type working on the same channel lattice as that on which the suboptimal equalizer works from the extrinsic item of information on the coded bits at the output of the decoder.

3. Method according to Claim 1, **characterized in that** the re-estimation process is a linear process of bootstrap type satisfying the MMSE criterion using a hardened version of the a posteriori item of information on the coded bits at the output of the decoder.

4. Method according to any of Claims 1 to 3, **characterized in that** the suboptimal equalization process consists in combining a prefiltering, making the channel minimum phase, that is to say maximizing the energy on the first coefficients of the equivalent discrete channel, and a DDFSE process with soft inputs and outputs.

5. Method according to Claim 4, **characterized in that** said DDFSE process comprises a soft outputs computation procedure based on an outbound-return recursion, in which the computation of the transition metric is a computation by survivors on only the outbound recursion.

6. Method according to any of Claims 1, 2 and 3, **characterized in that** the suboptimal equalization process is based on a generalized survivor processing operation, consisting in retaining a determined number of survivors per node of the channel lattice reduced in terms of number of states, in which the computation of the soft outputs is performed by a simple outbound recursion.

7. Method according to Claim 1, 2 or 4, **characterized in that** said equalization process consisting of an equalization process of DDFSE type, in which a single survivor per node is retained, the latter further consists:

   • prior to any iteration,

      - in computing, from said initial linear estimation of the coefficients of the impulse response $\hat{H}_{(z)}^{(1)}$ of the transmission channel, a minimum phase filter $\hat{P}_{(z)}^{(1)}$, respectively an anti-Causal filter $\hat{Q}_{(z)}^{(1)}$ with $\hat{H}_{(z)}^{(1)} * \hat{Q}_{(z)}^{(1)} = \hat{P}_{(z)}^{(1)}$ the filter $\hat{P}_{(z)}^{(1)}$ being defined as a transmission channel with initial minimum phase, then

   • by iteration,

- in submitting said sequence of symbols received to said equalization process, conditionally on the values of the minimum phase filter $\hat{P}_{(z)}^{(l)}$, defined as a transmission channel with successive minimum phase for the current iteration, and, from said updated linear estimation $\hat{H}_{m(z)}^{(l+1)}$, for the next iteration;

- in performing an updating, for the next iteration, of the minimum phase filter $\hat{P}_{(z)}^{(l+1)}$, defined as a transmission channel with successive minimum phase, and the anticausal filter $\hat{Q}_{(z)}^{(l+1)}$ associated with the latter.

8. Method according to one of the preceding claims, **characterized in that** said step consisting in performing an updated estimation of the coefficients of the impulse response $\hat{H}_{(z)}^{(l+1)}$ for the next iteration consists:

- in submitting said sequence of weighted outputs on decoded bits to an interleaving;
- in submitting the flow of the re-interleaved sequence of weighted outputs to a hard decision to reconstruct the symbols received;
- in submitting the reconstructed received symbols to a linear pseudo-inversion process over all of the reconstructed received symbols.

9. System for detection and iterative decoding with reduced complexity of coded and interleaved symbols on a transmission channel, these symbols being transmitted from a sequence of binary symbols, each sequence of symbols received comprising at least, in addition to the data, guard and tail symbols, specific learning symbols, **characterized in that** it comprises at least:

- suboptimal equalization means (1) with soft inputs and outputs receiving said received symbols and delivering a sequence of weighted outputs on equalized symbol bits;
- means (2) for computation and iterative exchange of a priori items of information, on the one hand, on the symbol bits, for the suboptimal equalization process, originating from the decoded symbol bits, and, on the other hand, on the coded bits, for the decoding process, originating from the symbol bits equalized by suboptimal equalization;
- decoding means (3) with soft inputs and outputs receiving said a priori item of information on the coded bits and delivering a sequence of weighted outputs on decoded bits deriving from the decoding process;
- means (4) for updated iterative estimation of the coefficients of the impulse response of the transmission channel, according to the items of information delivered by the iterative suboptimal equalization and decoding process.

10. System according to Claim 9, **characterized in that** said updated iterative estimation means (4) comprise:

- means (40) for initial estimation of the coefficients of the impulse response of the transmission channel;
- means for updated iterative estimation of EM type of the coefficients of the impulse response of the transmission channel.

11. System according to Claims 9 and 10, **characterized in that**:

- said suboptimal equalization means (1) consist of MLSE equalization means with soft inputs/outputs;
- said decoding means (3) consist of BCJR decoding means with soft inputs/outputs.

12. System according to Claims 9 and 10, **characterized in that**:

- said suboptimal equalization means (1) consist of DDFSE equalization means with soft inputs/outputs;
- said decoding means (3) consist of BCJR decoding means with soft inputs/outputs.

13. System according to Claims 9 and 10, **characterized in that**:

- said suboptimal equalization means (1) consist of GSOVA equalization means;

- said decoding means (3) consist of BCJR decoding means with soft outputs.

14. System according to Claim 9 and one of Claims 12 and 13, **characterized in that** said updated iterative estimation means (4) comprise:

- means (41) for re-interleaving the sequence ($S_2$) of weighted outputs on decoded bits deriving from the decoding process, delivering a sequence of weighted outputs on re-interleaved decoded bits;
- hard decision means (42) receiving the sequence of weighted outputs on re-interleaved decoded bits and delivering a sequence of reconstructed received symbol bits;
- means (43) for linear pseudo-inversion over all of the reconstructed received symbols, making it possible to deliver an updated estimation of the coefficients of the impulse response of the transmission channel $\hat{H}^{(l+1)}_{(z)}$.

FIG.1a.

FIG.1b.
(ART ANTÉRIEUR)

| SYMBOLES 3 DE QUEUE | SYMBOLES 57 DE DONNÉES | SYMBOLES 26 (CAZAC) APPRENTISSAGE | SYMBOLES 57 DE DONNÉES | SYMBOLES 3 DE QUEUE | SYMBOLES 9 DE GARDE |
|---|---|---|---|---|---|

FIG.1c.
(ART ANTÉRIEUR)

EP 1 282 968 B1

$\overline{u}=\{u_t\}$ → CODEUR DE CANAL → $\overline{c}=\{c_t\}$ → π → MODULATEUR PSK → $\overline{x}=\{x_t\}$ → $\overline{z}=\{z_t\}$

CANAL EQUIVALENT EN TEMPS DISCRET FILTRES Tx ET Rx INCLUS

$\overline{b}=\{b_t\}$ → ⊕
BRUIT BLANC GAUSSIEN

$\hat{u}=\{\hat{u}_t\}$ ← RÉCEPTEUR ← $\overline{y}=\{y_t\}$   DÉMODULATEUR

## FIG.1d .(ART ANTÉRIEUR)
MODÈLE DISCRET ÉQUIVALENT EN BANDE DE BASE

S1

$S''2$ → $S'1 = S1 - S''2$ — D11

$S'1$

$\pi^{-1}$ — D12

D1

$S''1$

FIG.2b.

S2 → $S'2 = S2 - S''1$ — D21

$S'2$

$\pi$ — D22

D2

$S''2$

27

FIG.2a.

$$\hat{y} = \{yt\}$$

**FIG.2c** :DDFSE+B_ST

| | |
|---|---|
| ESTIMATION LINÉAIRE INITIALE $\hat{H}_{(z)}^{L=0}$ | —A |

CALCUL
$\hat{P}_{(z)}^{L}$ FILTRE PHASE MIN. —A1
$\hat{Q}_{(z)}^{L}$ FILTRE ANTI CAUSAL

$\hat{P}_{(z)}^{L}$

ÉGALISATION À ENTRÉES ET SORTIES PONDÉRÉES —B

D11

DISCRIMINATION ÉLÉMENTAIRE

D12 } D1

$\pi^{-1}$

F,G

$L = L+1$

DÉCODAGE À ENTRÉES ET SORTIES PONDÉRÉES —C

D21

DISCRIMINATION ÉLÉMENTAIRE

D22

$\pi$ } D2

ESTIMATION ACTUALISÉE $\hat{H}_{(z)}^{L+1}$ —E2

ACTUALISATION
$\hat{P}_{(z)}^{L+1}$ $\hat{Q}_{(z)}^{L+1}$ —E21

FIG.2d : DDFSE+B_ST
+ CEPSTRE

$$\bar{y} = \{y_t\}$$

ESTIMATION LINÉAIRE
$\hat{H}^{L=0}_{(z)}$ ——A

MÉTHODE DU CEPSTRE ——A10

CALCUL
$\hat{P}^L_{(z)}$ FILTRE PHASE MIN. ——A1
$\hat{Q}^L_{(z)}$ FILTRE ANTI CAUSAL

$\hat{P}^L_{(z)}$

ÉGALISATION À ENTRÉES ET
SORTIES PONDÉRÉES ——B

DISCRIMINATION ÉLÉMENTAIRE ——D11

$\pi^{-1}$ ——D12

D1

DÉCODAGE À ENTRÉES ET
SORTIES PONDÉRÉES ——C

DISCRIMINATION ÉLÉMENTAIRE ——D21

$\pi$ ——D22

D2

F,G

$L = L+1$

ESTIMATION ACTUALISÉE
$\hat{H}^{L+1}_{(z)}$ ——E2

METHODE DU CEPSTRE ——E210

ACTUALISATION
$\hat{P}^{L+1}_{(z)}$   $\hat{Q}^{L+1}_{(z)}$ ——E21

30

# FIG.2e.

RÉ_ENTRELACEMENT
$\pi$ — Ea

DÉCISION DURE $\int$ — Eb

PSEUDO INVERSION
LINÉAIRE — Ec

# FIG.2f: SISO MLSE
+EM

$\bar{y}=\{y_t\}$

ESTIMATION INITIALE
$\hat{H}^{L=0}_{(z)}$ — A

ÉGALISATION
SISO MLSE — B

DISCRIMINATION ÉLÉMENTAIRE — D11

$\pi^{-1}$ — D12

} D1

F,G

$L = L+1$

DÉCODAGE SISO — C

DISCRIMINATION ÉLÉMENTAIRE — D21

$\pi$ — D22

} D2

ESTIMATION EM ACTUALISÉE
$\hat{H}^{L+1}_{(z)}$ — E (E2)

FIG.3a.

FIG.3b.

FIG.3c.

FIG.3d.

FIG.4a.

FIG.4b.

FIG.4c.

## EP 1 282 968 B1

### RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Delayed Decision-Feedback Séquence Estimation. IEEE Trans. on Commun. A. DUEL-HALLEN, C. HEEGARD, Mai 1989, vol. 37, 428-436
- Filtre correcteur de phase pour égaliseurs sous-optimaux. A. WAUTIER, J.C. DANY, C. MOUROT, 1992, vol. 9-10
- **C. DOUILLARD ; M. JEZEQUEL ; C. BERROU ; A. PICART ; P. DIDIER ; A. GLAVIEUX.** Iterative Correction of Intersequential Interference: Turbo-Equalization. European Transactions on Télécommunications, Septembre 1995, vol. 6, 507-511
- A Low Complexity Soft Output Viterbi Decoder Architecture. *ICC'93,* Mai 1993, 733-740
- Optimal Decoding of Linear Codes for Minimizing Symbol Error Rate. Information Theory. L.R. BAHL, J. COCKE, F. JELINEK, J. RAVIV, Mars 1994, 284-287
- Iterative Equalization and Decoding in Mobile Communications Systems. Proc. EPMCC'97. G. BAUCH, H. KHORRAM, J. HAGENAUER, Septembre 1997
- A Comparison of Soft-In-Soft-Out Algorithms for Turbo-Detection. International Conference on Télécommunications (ICT). G. BAUCH, V. FRANZ, Juin 1998, vol. 2, 259-263
- Turbo-Equalization over Frequency Selective Channel. *International Symposium on Turbo-Codes,* Septembre 1997

- Joint Equalization and Decoding: Why Choose the Iterative Solution?. IEEE VTC'1999 Fall. A. ROUMY, I. FIGALKOW, D. PIREZ, Septembre 1999
- Improved blind turbo detector. **PANBONG HA et al.** IEEE 51st Vehicular Technology Conference Proceedings. SPRING, 18 Mai 2000, vol. 2 15, 1196-1199
- **BAUCH G et al.** Iterative Equalization and Decoding for the GSM - System. IEEE, 18 Mai 1998, 2262-2266
- A List-type reduced Constraint Generalization of the Viterbi Algorithm. IEEE Trans. Info Theory. T. HASHIMOTO, Novembre 1987, vol. 33, 866-876
- A Viterbi Algorithm with soft Decision Outputs and its Applications. J. HAGUENAUER et P. HOEHER, 1680-1686
- SEMIBLIND MAXIMUM A POSTERIORI MULTIPATH FAST FADING CHANNEL ESTIMATION FOR TDMA SYSTEMS. IEEE VTS, 50th Vehicular Technology Conference. Mohamed SIALA, Rafael BRU GIBERT, 19 Septembre 1999
- Filtre correcteur de phase pour égaliseurs sous-optimaux. Annales de Télécommunications. A VAUTIER, J.C. DANY, C. MOUROT, 1992, vol. 9-10
- Maximum Likelihood from incomplete Data via the Idem Algorithms. Stat. Soc., Sor. A.P DEMSTER, N.M. LAIRD, D.B. RUBIN, J. ROY, 1977, vol. 39, 1-38